# EUROPÄISCHE PATENTSCHRIFT

(11) **EP 3 117 360 B1**
(45) Veröffentlichungstag und Bekanntmachung des Hinweises auf die Patenterteilung: **09.09.2020**
(21) Anmeldenummer: 15708815.4
(22) Anmeldetag: 06.03.2015
(51) Int. Cl.: G06F 21/41, G06Q 20/10, G06Q 20/34, G06Q 20/38, G06Q 20/40, G06Q 20/02

(54) **ID-PROVIDER-COMPUTERSYSTEM**
ID PROVIDER COMPUTER SYSTEM
SYSTÈME INFORMATIQUE DE FOURNISSEUR D'IDENTIFIANT

(30) Priorität: 14.03.2014 DE 102014204812; 06.05.2014 DE 102014106310
(43) Veröffentlichungstag der Anmeldung: 18.01.2017
(73) Patentinhaber: Bundesdruckerei GmbH, 10969 Berlin (DE)
(72) Erfinder: SCHERFENBERG, Ivonne, 10119 Berlin (DE); SCHRÖDER, Martin, 12437 Berlin (DE); MORGNER, Frank, 15537 Grünheide (DE)
(74) Vertreter: Richardt Patentanwälte PartG mbB
(86) Internationale Anmeldenummer: PCT/EP2015/054776
(87) Internationale Veröffentlichungsnummer: WO 2015/135859

(56) Entgegenhaltungen:
- DE-B3-102011 089 580
- US-A1- 2007 079 136
- US-A1- 2013 305 378

## Beschreibung

Die Erfindung betrifft computerimplementierte Verfahren zur Bestätigung einer digitalen Identität eines Nutzers sowie ein entsprechendes ID-Provider-Computersystem und Dienst-Computersystem.

Eine zunehmende Anzahl von geschäftlichen und sonstigen Transaktionen wird in elektronischer Form, zum Beispiel über das Internet, durchgeführt. Dies reicht von Bankdienstleistungen (Online-Banking), elektronischem Ticketerwerb, sozialen Netzwerken, Remote-Zugang zu Firmennetzwerken und vertraulichen Daten über Carsharing- oder Autovermietungs-Portale bis hin zu speziellen Sicherungsanlagen, die einzelnen Nutzern in Abhängigkeit von deren digitaler Identität Zugang zu Objekten (z.B. Daten oder Sicherheitsbereiche), die durch die Sicherungsanlage geschützt werden, gewähren.

Bei der Übermittlung von Nutzerdaten des Nutzers, der einen Dienst nutzen will, treten erhebliche Interessenkonflikte zwischen Nutzer und Dienstleister auf, die technisch bisher nur unzureichend gelöst werden konnten: so ist der Dienstleister in der Regel daran interessiert, so viele nutzerbezogene Daten wie möglich zu erhalten, und zwar auf eine Art und Weise, die sicherstellt, dass diese Daten auch die tatsächlichen Eigenschaften des Nutzers wiedergeben. Der Dienstanbieter will dadurch sicherstellen, dass er die Person, die den Dienst in Anspruch nimmt, erforderlichenfalls identifizieren und/oder kontaktieren kann, etwa zum Zwecke der Rechnungserstellung oder bei Haftungsfällen. Der Nutzer dagegen hat in der Regel aus Datenschutzgründen Interesse daran, so wenige Daten wie möglich zur Verfügung zu stellen.

Ein Nutzer verwaltet i.d.R. eine Vielzahl verschiedener digitaler Identitäten um sich gegenüber verschiedenen Diensten zu authentifizieren. Viele Nutzer besitzen z.B. mehrere E-Mail-Accounts, wobei lediglich ein Teil dieser Accounts unter dem Realnamen des Nutzers registriert wurden. Viele E-Mail-Adressen bestehen aus Fantasienamen, die keinen Rückschluss auf die reale Person zulassen. Oftmals geben die Nutzer bei der Einrichtung derartiger Mailadressen bewusst einen falschen Wohnort an. Auf der anderen Seite werden elektronische Gesundheitskarten und elektronische Ausweisdokumente immer verbreiteter, die eine Preisgabe des Realnamens und einer gültigen Adresse bei der Registrierung bzw. Ausstellung erfordern. Der Nutzer muss also eine Vielzahl von unterschiedlichen Identitäten mit jeweils unterschiedlichen Passwörtern oder sonstigen Zugangsdaten sicher verwalten.

Teilweise wird diese Verwaltungsarbeit dem Nutzer durch spezialisierte Identity-Provider Dienstleister abgenommen, die eine Vielzahl von Nutzer-Accounts verwalten können. Der Nutzer weißt z.B. in vorgegebenen Mindestabständen gegenüber dem ID-Provider eine oder mehrere seiner digitalen Identitäten nach, z.B. durch persönliche Vorlage eines aktuellen Personalausweises, Führerscheins oder eines anderen Dokuments mit den jeweils relevanten Nutzerattributen. Alternativ dazu kann der Nachweis auch durch Einsendung einer beglaubigten Kopie dieser Dokumente oder mittels elektronischer Datenübertragung erfolgen. Dieser Vorgang wird als "Verifikation" einer digitalen Identität bzw. der diese Identität ausmachenden Attributwerte eines Nutzers durch das ID-Provider Computersystem bezeichnet. Je nach Art der Verifikation kann dies für den Nutzer mit einigem Aufwand verbunden sein (persönliches Erscheinen, Einsendung beglaubigter Ausweisdokumente, etc.).

Die besagte Verlagerung entlastet den Nutzer zwar im Hinblick auf die sichere Verwaltung seiner digitalen Identität, löst bzw. lindert den grundsätzlichen Konflikt zwischen dem Interesse der Dienstanbieter an sicheren und vertrauenswürdigen Nutzerdaten einerseits und dem Interesse des Nutzers auf Datenschutz und Anonymität andererseits jedoch nicht. Außerdem besteht das Problem, dass unterschiedliche Dienste unterschiedliche Anforderungen im Hinblick auf die Verlässlichkeit auf die Richtigkeit einzelner Attributwerte des Nutzers besitzen und unterschiedliche Dienste unterschiedliche Attribute des Nutzers als relevant erachten. Je mehr Dienste ein Nutzer in Anspruch nimmt, desto höher der Aufwand für den Nutzer, denn ggf. muss er sich für jede seiner dienstspezifischen Identitäten gegenüber dem ID-Provider einmalig oder mehrfach ausweisen ("Registrierung" bei und "Verifikation" gegenüber dem ID-Provider-Computersystem).

US Patentanmeldung US 20070079136 A1 beschreibt ein Authentifizierungsverfahren das zumindest teilweise auf der Verwendung von Kontextinformationen einer Transaktion basiert. Der Kontext kann bestimmt werden durch verschiedene Regeln die sich auf den Zugang zu den Informationen oder die Fähigkeit, die Transaktion durchzuführen, beziehen. Das Verfahren kann die Registrierung eines Gerätes als vertrauenswürdiges Gerät beinhalten, wobei mehrere Vertrauensniveaus existieren können.

Das Patent DE 102011089580 B3 beschreibt ein Datenverarbeitungssystem mit einem ID-Provider-Computersystem. Das ID-Provider-Computersystem beinhaltet Mittel zum Empfang eines SAML-Request, Mittel zur Authentifizierung des ID-Provider-Computersystems gegenüber einem ID-Token, Mittel zur Durchführung eines Lesezugriffs zum Lesen eines in dem ID-Token gespeicherten Attributs über das Netzwerk nach erfolgreicher Durchführung der Authentifizierung, Mittel zur Erzeugung einer SAML-Response, welche das ausgelesene Attribut, einen Identifikator und eine Adresse beinhaltet, und Mittel zur Speicherung der SAML-Response.

US Patentanmeldung US 20130305378 beschreibt ein Verfahren zur Vermittlung von Vertrauen zwischen einem Dienstanbieter und einem Kunden (Client) des Dienstanbieters. Der Kunde ist mit einer Partei verbunden, die von einem Identitätsanbieter bekannt ist, dem vom Dienstanbieter vertraut wird. Der Identitätsanbieter kontaktiert die Partei und fordert diese auf, sich selbst zu identifizieren. Der Identitätsanbieter bestimmt, ob die Identität des Identifizierungspartners einer von dem Identitätsanbieter für den Teilnehmer gehaltenen Identität entspricht.

Microsoft Windows CardSpace ist ein Client-basiertes digitales Identitätssystem, welches es Internetbenutzern ermöglichen soll, ihre digitale Identität gegenüber Online-Diensten mitzuteilen. Nachteilig an manchen von CardSpace unterstützten Kartentypen ist, dass der Nutzer seine digitale Identität manipulieren kann, so dass dieses System bei Verwendung der Karten des besagten Typs von manchen Diensten als nicht hinreichend vertrauenswürdig angesehen wird. Bei OpenID handelt es sich dagegen um ein Server-basiertes System. Ein so genannter Identity-Server speichert eine Datenbank mit den digitalen Identitäten der registrierten Nutzer. Nachteilig ist hieran unter anderem, dass gängige OpenID Provider nur genau eine Identität pro Nutzer gespeichert haben und dass diese Identität für alle Arten von Onlinetransaktionen verwendet wird. kann.

Der Erfindung liegt demgegenüber die Aufgabe zugrunde, ein verbessertes Verfahren zur Prüfung der digitalen Identität eines Nutzers zu schaffen, sowie ein entsprechendes ID-Provider-Computersystem und ID-Token.

Die der Erfindung zugrunde liegenden Aufgaben werden jeweils mit den Merkmalen der unabhängigen Patentansprüche gelöst. Ausführungsformen der Erfindung sind in den abhängigen Ansprüchen angegeben.

Unter einem "Vertrauensniveau" wird im Folgenden eine Menge von ein oder mehreren Parameterwerten verstanden, welche einen Grad der Verlässlichkeit der Zuordnung des Attributwertes zu dem Nutzer und/oder den Grad der Verlässlichkeit auf die Richtigkeit des Attributwertes angeben. Vorzugsweise ist eine vordefinierte Menge von möglichen Vertrauensniveaus zwischen einem ID-Provider-Computersystem und ein oder mehreren Dienst-Computersystemen vereinbart. So könnten beispielsweise die folgenden vier Vertrauensniveaus zwischen dem ID-Provider-Computersystem und mehreren Dienst-Computersystemen vereinbart sein: "L4: sehr hohe Vertrauenswürdigkeit", "L3: erhöhte Vertrauenswürdigkeit", "L2: Standard-Vertrauenswürdigkeit", "L1: Basis-Vertrauenswürdigkeit". Alternativ dazu kann das Vertrauensniveau auch als Prozentwert spezifiziert sein, wobei 100% die Erfüllung höchster Sicherheitsanforderungen impliziert.

Unter einem "Dienst-Computersystem" wird im Folgenden ein Computersystem verstanden, das einen Dienst bereitstellt. Der Dienst kann verschiedenste Hardware- und/oder softwarebasierte Funktionen umfassen, wie etwa die Gewährung eines Zugriffs auf geschützte Gebäude oder Gegenstände oder auf Softwarefunktionen oder Daten. Der Dienst kann ein Online-Dienst, insbesondere ein Clouddienst sein. Das Dienst-Computersystem stellt seinen Dienst jedoch nur an Personen zur Verfügung, die sich gegenüber dem Dienst-Computersystem authentifiziert haben, also dem Dienst-Computersystem einen hinreichend glaubwürdigen Beweis der eigenen digitalen Identität bereitgestellt haben.

Unter einem "Identity(ID)-Provider-Computersystem" wird im Folgenden ein Computersystem verstanden, welches eine digitale Identität eines Nutzers einem Dritten gegenüber bestätigt und/oder diese digitale Identität einem Dritten bereitstellt. Dieser Dritte kann ein weiteres Computersystem sein, das mit dem ID-Provider-Computersystem über ein Netzwerk verbunden ist, z.B. ein Dienst-Computersystem.

Ein "Attributwert" ist ein Datenwert für ein Attribut und ist einem Nutzer zugeordnet.

Unter "digitale Identität" wird im Folgenden eine Menge aus ein oder mehreren Attributwerten eines Nutzers verstanden, wobei die Attributwerte bestimmte Eigenschaften des Nutzers oder eines mit dem Nutzer in Beziehung stehenden Sachverhalts angeben. Ein Nutzer kann eine oder mehrere digitale Identitäten besitzen. Eine digitale Identität kann aus einer dienstspezifischen Menge an Attributen und deren zugehörigen Werten eines Nutzers bestehen. Ein Nutzer hat also unterschiedliche digitale Identitäten im Hinblick auf unterschiedliche Dienste.

Unter einem "Nutzer", der eine oder mehrere digitale Identitäten besitzt, wird im Folgenden eine natürliche Person verstanden. Wie oben erwähnt, können dieser Person mehrere digitale Identitäten zugeordnet sein. Es ist auch möglich, dass der Nutzer in Auftrag von oder in Vertretung einer juristischen Person handelt. In diesem Fall kann es sein, dass eine oder alle der digitalen Identitäten des Nutzers eine digitale Identität der juristischen Person ist. Der Einfachheit halber wird im Folgenden aber nicht zwischen diesen beiden Fällen unterschieden und die digitale Identität der juristischen Person subsummiert unter der "digitalen Identität des Nutzers", der für die juristische Person handelt.

Unter einem "Nutzer-Computersystem" wird im Folgenden ein Datenverarbeitungssystem, z.B. ein Desktop-PC, ein Notebook oder ein Smartphone verstanden, welches dem Nutzer erlaubt, einen Dienst, der von einem Dienst-Computersystem bereitgestellt wird, über ein Netzwerk, z.B. das Internet, anzufordern.

Ein "ID-Token" kann ein softwarebasiertes oder hardwarebasiertes ID-Token sein. Ein softwarebasiertes ID-Token kann z.B. ein X.509 Zertifikat sein, welches von seinem Aussteller signiert wurde und dessen Signatur von einem Dritten prüfbar ist. Ein softwarebasiertes ID-Token kann auch aus einem SAML-Token bestehen. Ein ID-Token ist einem Nutzer zugeordnet. Ein hardwarebasiertes ID-Token ist ein tragbares elektronisches Gerät, zum Beispiel ein Smartphone, oder ein Dokument, insbesondere ein Wert- oder Sicherheitsdokument, das z.B. in Form einer Chipkarte ausgebildet ist. Ein hardwarebasiertes ID-Token umfasst einen Prozessor und ein Speichermedium zur sichern Speicherung von Daten, z.B. von personenbezogenen Attributen oder privaten Schlüsseln. Bei dem hardwarebasierten ID-Token kann es sich um ein papierbasiertes und/oder kunststoffbasiertes Dokument handeln. Darunter fallen zum Beispiel Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Bankkarten und Kreditkarten, Frachtbriefe oder sonstige Berechtigungsnachweise, in die ein Datenspeicher und Prozessor integriert ist. Es ist auch möglich, dass das ID-Token und das Nutzer-Computersystem in einem einzigen Gerät realisiert sind, z.B. einem Smartphone. Ein Sicherheitselement des Smartphones kann in diesem Fall als ID-Token fungieren.

Ein "Attribut" ist ein Typ eines Datenwertes wie etwa 'Name', 'Straße', 'Telefonnummer' und dient als Platzhalter, der mit nutzerspezifischen Attributwerten belegt bzw. assoziiert werden kann. Ein "Attributwert" dagegen ist ein konkreter, einem Nutzer zugeordneter Datenwert, der eine Eigenschaft der digitalen Identität des Nutzers im Hinblick auf ein bestimmtes Attribut angibt. Der Zahlenwert "19" kann also ein Attributwert einer Person für das Attribut "Alter" sein.

In einem Aspekt betrifft die Erfindung ein computerimplementiertes Verfahren zur Bestätigung und zur Prüfung einer digitalen Identität eines Nutzers, wobei das Verfahren durch ein ID-Computersystem und durch ein Dienst-Computersystem ausgeführt wird. Das Verfahren umfasst:
- automatische Berechnung von Vertrauensniveaus jeweils für Attributwerte von Attributen durch das ID-Provider-Computersystem mit Hilfe einer ersten Funktion, wobei die erste Funktion die Vertrauensniveaus in attributunabhängiger Weise berechnet, wobei die digitale Identität des Nutzers mehrere der Attributwerte beinhaltet, wobei das Vertrauensniveau einen Grad der Verlässlichkeit der Zuordnung des jeweiligen Attributwertes zu dem Nutzer und/oder den Grad der Verlässlichkeit auf die Richtigkeit des Attributwertes angibt; ein "Vertrauensniveau" gibt jeweils einen Grad der Verlässlichkeit der Zuordnung des Attributwertes zu dem Nutzer und/oder den Grad der Verlässlichkeit auf die Richtigkeit des Attributwertes an;
- automatische Durchführung von mehreren zweiten Funktionen durch das ID-Provider-Computersystem, wobei jede der zweiten Funktionen einem oder mehreren der Attribute spezifisch zugeordnet ist, wobei die Durchführung der zweiten Funktionen jeweils eine Neuberechnung der Vertrauensniveaus der Attributwerte derjenigen Attribute bewirkt, denen die zweite Funktion zugeordnet ist;
- Empfang einer Anfrage zur Bestätigung der digitalen Identität des Nutzers, wobei die Anfrage durch das ID-Provider-Computersystem von dem Dienst-Computersystem über ein Netzwerk empfangen wird, wobei die Anfrage mehrere der Attribute enthält; durch die Anfrage soll das ID-Provider-Computersystem veranlasst werden, dem Dienst-Computersystem die digitale Identität des Nutzers zu bestätigen;
- Senden einer Antwort von dem ID-Provider-Computersystem an das Dienst-Computersystem über das Netzwerk, wobei die Antwort für mehrere der Attribute der Anfrage jeweils zumindest einen dem Nutzer zugehörigen Attributwert und das diesem Attributwert zugeordnete und mittels einer der zweiten Funktionen neuberechnete Vertrauensniveau beinhaltet, wobei die Vertrauensniveaus ihrem jeweiligen Attributwert als Metainformation zugeordnet sind;
- Prüfung der digitalen Identität des Nutzers durch das Dienst-Computersystem durch automatische Auswertung sowohl der in der Antwort enthaltenen Attributwerte als auch der diesen jeweils zugeordneten und in der Antwort enthaltenen Vertrauensniveaus.

Die erstmalige, attributunabhängige Berechnung der Vertrauensniveaus in Kombination mit der Neuberechnung der Vertrauensniveaus durch attributspezifische zweite Funktionen kann vorteilhaft sein, da ein besonders feingranulares und exaktes Verfahren zur Bestätigung der digitalen Identität eines Nutzers bereitgestellt wird, das von ganz unterschiedlichen Diensten mit unterschiedlichen Anforderungen im Hinblick auf die Auswahl der eine Identität ausmachenden Attribute genutzt werden kann: die Berechnung von attributspezifischen Vertrauensniveaus mit der ersten Funktion in nicht attributspezifischer, generischer Weise ist vorteilhaft, da hier eine Vielzahl von Faktoren berücksichtigt werden kann, die Einfluss auf die Verlässlichkeit der Richtigkeit von durch den ID-Provider verwalteten Attributwerten berücksichtigt werden können.

Es hat sich jedoch herausgestellt, dass die Aussagekraft und Akkuratheit der Vertrauensniveaus dadurch erheblich gesteigert werden kann, dass man (durch Anwendung der zweiten Funktionen) auch attributspezifische Einflussfaktoren bei der Berechnung der Vertrauensniveaus berücksichtigt.

Eine Kombination von generischen ersten und attributspezifischen zweiten Funktionen ist in der Lage, attributspezifische Vertrauensniveaus mit hoher Akkuratheit zu berechnen.

Insbesondere kann die Verwendung der attributspezifischen zweiten Funktionen zur Berechnung der Vertrauensniveaus vorteilhaft sein, da sich herausgestellt hat, dass die Vertrauenswürdigkeit bestimmter Attribute über die Zeit und/oder im Hinblick auf die Zugehörigkeit des Nutzers zu bestimmten Gruppen stark von der Art des jeweiligen Attributs abhängt. So wurde beobachtet, dass zweite Funktionen, welche das Vertrauensniveau von Adressdaten gegenüber dem ursprünglichen (von der ersten Funktion errechneten) Wert reduzieren, falls der Nutzer zu einer bestimmten Altersgruppe (18-25) gehört, die Exaktheit der Vertrauensniveauberechnung erhöht. Diese Altersgruppe setzt sich zum großen Teil aus Studenten und Berufsanfängern zusammen, die häufiger umziehen als Kinder oder ältere Personen. Dies gilt aber spezifisch für adressbezogene Attribute. Andere Attribute, wie z.B. die Wahrscheinlichkeit, mit dem Auto einen Verkehrsunfall zu verursachen, können einer völlig anderen Heuristik folgen, welche z.B. für Berufsgruppen mit hohem Reiseanteil (Außendienst, Busfahrer, Taxifahrer) ein geringes Vertrauensniveau im Hinblick auf Unfallfreiheit errechnet, für Berufsgruppen mit geringem Reiseanteil dagegen ein hohes Vertrauensniveau im Hinblick auf Unfallfreiheit errechnet. Durch die Kombination von ersten und zweiten Funktionen zur Berechnung der Vertrauensniveaus wird ein besonders akkurates Berechnungsverfahren bereitgestellt, da sowohl solche Parameter in den ersten Funktionen berücksichtigt werden, die generell einen Einfluss auf die Vertrauenswürdigkeit von Attributen haben (z.B. Sicherheit der verwendeten technischen Infrastruktur), als auch solche Parameter in den zweiten Funktionen berücksichtigt werden, die von der Art der jeweiligen Attribute abhängt.

Für die Bereitstellung eines Dienstes an den Nutzer kann also die Erbringung eines Nachweises, d.h., einer Bestätigung, der digitalen Identität des Nutzers gegenüber diesem Dienst erforderlich sein. Die Bestätigung kann beinhalten, dass eine vertrauenswürdige Instanz, z.B. das ID-Provider-Computersystem, einen von dem Dienst als hinreichend sicher erachteten Nachweis der Richtigkeit von Attributwerten eines bestimmten Nutzers in Form attributwertspezifischer Vertrauensniveaus erbringt. Das Dienst-Computersystem kann eine Prüfung dieses Nachweises vornehmen, und den Dienst nur dann zur Verfügung stellen, wenn die Prüfung ergibt, dass die Attributwerte eine Bereitstellung des Dienstes erlauben (Volljährigkeit bei KFZ-Verleihdiensten) und das für die Altersangabe erhaltene Vertrauensniveau hinreichend groß ist, um z.B. willentliche Manipulation durch den Nutzer verlässlich auszuschließen. Die Bestätigung der digitalen Identität wird durch das ID-Provider-Computersystem vorgenommen, die Prüfung der Digitalen Identität wird unter Berücksichtigung der Vertrauensniveaus von dem Dienst-Computersystem vorgenommen.

Die Neuberechnung durch eine der zweiten Funktionen kann nach Ausführungsformen das bereits vorliegende, z.B. von der ersten Funktion berechnete oder von der zweiten Funktion zu einem früheren Zeitpunkt berechnete, Vertrauensniveau als Input verwenden und dieses lediglich modifizieren, insbesondere um das tatsächliche Vertrauensniveau noch akkurater zu berechnen. So kann z.B. eine zweite Funktion bewirken dass ein Ablauf einer vordefinierten Zeitspanne seit dem letzten Moment, an dem der Nutzer seine Authentizität gegenüber dem ID-Provider-Computersystem nachgewiesen hat, ein aktuell vorhandenes Vertrauensniveau um einen bestimmten absoluten oder relativen Wert sinkt. Ein von vorneherein hohes Vertrauensniveau wäre dann immer noch hoch, aber nicht mehr so hoch wie unmittelbar nach Erbringung des Nachweises. Ein von vorneherein geringes Vertrauensniveau wäre nach der Neuberechnung durch die zweite Funktion noch niedriger als zuvor.

In einem weiteren Aspekt hat die Bereitstellung attributspezifischer Vertrauensniveaus den Vorteil, dass ein Dienst auch von Verifikationsschritten "profitieren" kann, die ein Nutzer vornimmt, um seine digitale Identität gegenüber einem anderen Dienst zu verifizieren, so dass insgesamt die Anzahl der erforderlichen Verifikationsschritte sinkt.
Der Umstand, dass dem Dienst-Computersystem nicht nur die Attributwerte, sondern auch zugeordnete Vertrauensniveaus bereitgestellt werden, ermöglicht es dem Dienst-Computersystem zu entscheiden, ob das bzw. die Vertrauensniveau(s) für die Attributwerte des Nutzers jeweils einzeln oder in ihrer Gesamtheit als hinreichend vertrauenswürdig erachtet werden, um den Dienst an den Nutzer zur Verfügung zu stellen.
Die individuelle Berechnung der Vertrauensniveaus für die einzelnen Attributwerte mittels erster und zweiter Funktionen ermöglicht eine besonders feingranulare Darstellung und Kommunikation der Vertrauenswürdigkeit der einzelnen Attributwerte. Somit kann ein Dienst-Computersystem selbst "entscheiden", wie wichtig die Richtigkeit eines angegebenen Attributwerts im Hinblick auf den auszuführenden Dienst ist, und automatisch entsprechend reagieren. So sind Angaben über den Besitz und Gültigkeit eines Führerscheins für einen Autovermieter von sehr hoher Wichtigkeit, für einen Online-Shop für Schuhe jedoch nicht. Eine stärkere Entkopplung der von dem ID-Provider verwalteten Attributwerte von den betrieblichen oder technischen Anforderungen der Dienst-Computersysteme wird somit ermöglicht.

Die feingranulare Berechnung der Vertrauensniveaus einzelner Attributwerte kann auch dazu beitragen, den oben erwähnten Konflikt zwischen Sicherheitsbedürfnis des Dienstanbieters und Datenschutzbedürfnissen des Nutzers zu überwinden oder zumindest zu verringern: Um die Richtigkeit eines Attributwertes eines bestimmten Attributs, das einem Dienstanbieter besonders wichtig ist, mit hoher Verlässlichkeit nachzuweisen, musste der Nutzer bisher u.U. ein aufwendiges Verfahren durchlaufen, sich etwa beim Autovermieter persönlich unter Vorlage des Führerscheins ausweisen oder mittels eines sicheren ID-Provider Computersystems eine sehr vertrauenswürdige digitale Identität in ihrer Gesamtheit an den Dienst kommunizieren. Diese Gesamtheit enthielt oftmals deutlich mehr Daten über den Nutzer, als der Dienst notwendigerweise (in technischer, juristischer oder logistischer Hinsicht) von dem Nutzer wissen musste. Die Instanz, die die Daten mit hinreichendem Schutz gegenüber Manipulation sammelte und/oder speicherte, war oftmals eine von dem Dienst unabhängige Instanz, die Datenerfassung geschah also oftmals unspezifisch und es wurden mehr Daten erfasst, als dies für einen bestimmten Dienst notwendig gewesen wäre.

Zudem erfordert eine Vergabe von Vertrauensniveaus auch entsprechende technische Sicherheitsvorkehrung durch den ID-Provider für den Vorgang der Erfassung wie auch der Speicherung der Attributwerte. Für eine Vielzahl von Attributwerten, die für einige wenige Dienste zwar relevant sind, für die Mehrheit an Diensten jedoch nicht, lässt sich durch die attributwertspezifische Vergabe bzw. Berechnung von Vertrauensniveaus der Aufwand zur Erfassung und Speicherung dieser Attributwerte dadurch reduzieren, dass die Attributwerte nicht nach einem "Alles-oder-Nichts" Prinzip des Vertrauens erfasst bzw. gespeichert werden müssen, sondern die Attribute schlichtweg mit denjenigen Vertrauensniveaus assoziiert gespeichert werden können, mit denen sie faktisch verfügbar sind. Ob diese Vertrauensniveaus dann von einem Dienst im Einzelnen als hinreichend betrachtet werden, liegt im Ermessen des Dienstes. Somit kann der ID-Provider von der Aufgabe entlastet werden, möglichst für alle denkbaren Attributwerte eines Nutzers immer jeweils das höchstmögliche Vertrauensniveau bereitzustellen: Da die Niveaus individuell für die durch den ID-Provider vorgehaltenen Attributwerte gespeichert werden, können auch Attributwerte gespeichert und ggf. an einen Dienst zur Verfügung gestellt werden, die ein geringeres Vertrauensniveau besitzen. Dies entlastet den ID-Provider in technischer Hinsicht, da es nun dem Dienst überlassen ist, ob er einem bestimmten Attributwert angesichts dessen zugewiesenen Vertrauensniveau Vertrauen schenken kann. Dies kann zudem auch deshalb zum Interessenausgleich zwischen Dienst-Computersystem und Nutzer führen, da der Nutzer an den Dienst auch Daten zur Verfügung stellen kann, die ein sehr geringes Vertrauensniveau besitzen, die aber dennoch für den Dienst einen gewissen Wert haben. So können beispielsweise auch solche Daten über eine Menge von Kunden für einen Dienst interessant sein, die zwar die realen Kunden nicht völlig exakt beschreiben, aber der Realität doch näher kommen als eine rein auf demographischen Daten basierende Schätzung.

Für den Nutzer kann eine attributwertspezifische Vergabe von Vertrauensniveaus vorteilhaft sein, weil dadurch eine größere Zahl an digitalen Identitäten bereitgestellt werden kann und damit eine größere Anzahl an Diensten in Anspruch genommen werden kann, ohne dass der Nutzer sich bei diesen persönlich registrieren muss: Eine erste digitale Identität (z.B. als registrierter Nutzer eines Bank-Accounts) könnte die Attribute A1, A2 und A3 bzw. die entsprechenden Attributwerte beinhalten und für diese Identität und alle ihre Attributwerte einheitlich ein hohes Vertrauensniveau garantieren. Eine zweite Identität (z.B. als registrierter Kunde eines Online-Shops für Schuhe) könnte die Attribute A1, B1 und B2 beinhalten und für diese Identität und ihre Attributwerte einheitlich nur ein niedriges Vertrauensniveau garantieren. Ein weiterer Dienst, z.B. ein Online-Shop für Elektronik, bei dem sich der Nutzer noch nicht registriert hat, könnte jedoch Attributwert A1 mit hohem Vertrauensniveau und B1 mit zumindest niedrigem Vertrauensniveau erfordern. Weder die erste noch die zweite digitale Identität des Nutzers erfüllen also die Voraussetzungen des weiteren Dienstes: die Vertrauenswürdigkeit der zweiten digitalen Identität ist zu gering im Hinblick auf die Anforderungen des weiteren Dienstes bezüglich A1, und die als hinreichend vertrauenswürdig erachtete erste elektronische Identität enthält nicht B1. Bei im Stand der Technik bekannten Systemen muss sich also der Nutzer einem aufwändigen Registrierungsprozess unterziehen, um eine digitale Identität spezifisch für den weiteren Dienst zu erstellen.

Erfindungsgemäß kann aufgrund der erhöhten Granularität des durch den ID-Provider bestätigten Vertrauens dynamisch eine neue digitale Identität aus der bestehenden ersten und zweiten digitalen Identität generiert werden. Der Nutzer kann sich also u.U. ohne einen vorhergehenden dienstspezifischen Registrierungsprozess gegenüber einem Dienst authentifizieren, wenn nur die Menge an Attributen und deren Vertrauensniveaus, die das ID-Provider-Computersystem schon im Hinblick auf andere Dienste für den Nutzer gesammelt bzw. berechnet hat, ausreicht, den Erfordernissen dieses Dienstes zu genügen. Dies kann vorteilhaft sein, da aufwändige Registrierungsprozeduren dadurch vermieden werden.

Nach Ausführungsformen erfolgt auf den Empfang der Anfrage eine automatische Identifizierung der ein oder mehreren zweiten Funktionen, die den ein oder mehreren Attributen der Anfrage jeweils spezifisch zugeordnet sind. Diese identifizierten zweiten Funktionen werden sodann vom ID-Provider-Computersystem für die Neuberechnung der Vertrauensniveaus verwendet.

Dies kann vorteilhaft sein, da ein Dienst-Computersystem dynamisch über eine Anfrage ein beliebiges Set an Attributwerten von dem Nutzer samt jeweils verlässlich berechneter Vertrauensniveaus in Erfahrung bringen kann, ohne dass sich vorab das ID-Provider-Computersystem und das Dienst-Computersystem darauf hätten "einigen" müssen, welcher Satz an Attributen die digitale Identität des Nutzers gegenüber dem Dienst überhaupt ausmacht und wie sicher diese Daten gegenüber dem Dienst durch den ID-Provider verbürgt werden müssen. Da die Vertrauensniveaus attributspezifisch berechnet werden, kann einfach das für einen bestimmten Attributwert eines Nutzers zu gegebener Zeit vorliegende Vertrauensniveau zurückgegeben werden und der Dienst kann selbst und für jeden der Attributwerte einzeln "entscheiden", ob er das jeweils vorhandene Vertrauensniveau für ausreichend erachtet um den Dienst bereitzustellen. Es wird also durch das ID-Provider-Computersystem nicht notwendigerweise evaluiert, welcher *Dienst* die Anfrage versendet hat, um dann eine dienstspezifische Auskunft über die Vertrauenswürdigkeit der für einen Nutzer hinterlegten Attributwerte zurückzugeben. Vielmehr wird die Anfrage daraufhin analysiert, welche *Attribute* in dieser vorhanden sind, und es werden attributspezifische zweite Funktionen ausgeführt um die Vertrauensniveaus zu berechnen. Die gleiche zweite Funktion berechnet also ggf. das Vertrauensniveau für einen Attributwert für eine Vielzahl von unterschiedlichen Diensten. Das ID-Provider-Computersystem ist damit in hohem Maße flexibel und kann eine Vielzahl unterschiedlicher, dynamisch anforderbarer digitaler Identitäten eines Nutzers für eine Vielzahl unterschiedlicher Dienste bestätigen, und das auf höchst feingranularer Weise. Es ist somit nicht mehr notwendig, dass ID-Provider und Dienst sich vorab darauf einigen, welche Attribute eine digitale Identität ausmachen und wie vertrauenswürdig die digitale Identität als "Gesamtpaket" zu sein hat.

Nach manchen Ausführungsformen beinhaltet das Verfahren eine Zuweisung der ein oder mehreren zweiten Funktionen spezifisch zu einem der Attribute auf eine Weise, dass selektiv nur diejenigen Attribute eine zweite Funktion zugeordnet bekommen, welche in einem als veränderbar deklarierten Variablentyp gespeichert sind. Dies kann vorteilhaft sein, da die Identifizierung der den Attributen der Anfrage zugeordneten zweiten Funktionen beschleunigt wird. Attribute, deren Attributwerte in invarianten Variablentypen gespeichert sind, sind nicht mit einer zweiten Funktion verknüpft und werden im besagten Identifikationsschritt übersprungen. Zum Beispiel kann das Geburtsdatum eines Nutzers als invariabel angesehen werden und in dem Variablentyp "CONSTANT" gespeichert werden. Die Vertrauenswürdigkeit der Angabe des Geburtstages eines Nutzers kann zwar davon abhängen, ob der Nutzer oder Andere die entsprechende Datumsangabe manipulieren können. Diese mehr ins Technische gehenden Sicherheitsaspekte können mittels der ersten Funktion bei der Berechnung des entsprechenden Vertrauensniveaus berücksichtigt werden, z.B. dann, wenn der Attributwert gespeichert wird.

Alternativ oder zusätzlich dazu können ein oder mehrere der zweiten Funktionen bei ihrer Durchführung bewirken, dass das durch sie neuberechnete Vertrauensniveau von der Zeitspanne, die seit der letzten Berechnung des Vertrauensniveaus durch die erste Funktion vergangen ist, abhängt. Beispielsweise kann das berechnete Vertrauensniveau um so geringer sein, je mehr Zeit seit der letzten Berechnung des Vertrauensniveaus durch die erste Funktion vergangen ist. Dies kann vorteilhaft sein, da im Laufe der Zeit seit dem letzten Speichern eines Attributwertes (ein Zeitpunkt, der i.d.R. dem Zeitpunkt der Verifikation des Attributwertes entspricht), der Attributwert ungültig geworden sein kann. Ein Nutzer kann seinen Führerschein entzogen bekommen haben, kann umgezogen sein oder den Beruf gewechselt haben. Eine Anpassung des Vertrauensniveaus durch Berücksichtigung der besagten Zeitspanne kann also die Akkuratheit des berechneten Vertrauensniveaus erhöhen.

Alternativ oder zusätzlich dazu können ein oder mehrere der zweiten Funktionen bei ihrer Durchführung bewirken, dass das durch sie neuberechnete Vertrauensniveau von der Zeitspanne, die seit einer vordefinierten, absoluten Zeitangabe bis zur Durchführung der zumindest einen zweiten Funktion vergangen ist, abhängt. Beispielsweise kann das berechnete Vertrauensniveau um so geringer sein, je mehr Zeit seit Beginn eines bestimmten vordefinierten Datums vergangen ist.

Alternativ oder zusätzlich dazu können ein oder mehrere der zweiten Funktionen bei ihrer Durchführung bewirken, dass in das durch sie neuberechnete Vertrauensniveau eines der Attributwerte des Nutzers ein oder mehrere Attributwerte dieses Attributs und/oder anderer Attribute des gleichen Nutzers eingeht. So kann etwa das Vertrauensniveau von Adress-Attributwerten vom Wert des Attributs 'Alter' dieses einen konkreten Nutzers abhängen. Die zweite Funktion könnte eine Heuristik im Sinne einer "Wenn-Dann" Beziehung implementieren, die z.B. vorsieht, das Vertrauensniveau automatisch um eine vordefinierte Anzahl an Stufen zu verringern, wenn der Nutzer einen Wert für das Attribut "Alter" zwischen 18 und 25 Jahren hat. Falls z.B. keine konkreten Altersangaben verfügbar ist, aber der Nutzer einer bestimmten Personengruppe angehört (Schüler, Student, Berufsanfänger) die statistisch gesehen besonders häufig den Wohnort ändert, kann das Vertrauensniveau der Werte von Adressattributen auch von der Zugehörigkeit des Nutzers zu dieser Personengruppe abhängen.

Das Verfahren kann vorsehen, dass das ID-Provider-Computersystem Änderungen der Attributwerte aller bei dem ID-Provider-Computersystem registrierten Nutzer kontinuierlich erfasst, automatisch statistisch auswertet und automatisch Korrelationsheuristiken aus der statistischen Auswertung ableitet. Diese Korrelationsstatistiken werden dann automatisch oder manuell als zweite Funktion im Hinblick auf ein bestimmtes Attribut implementiert. Diese automatisch erstellte und in Form einer zweiten Funktion implementierte Heuristik kann von den Attributwerten mehrerer oder aller der besagten registrierten Nutzer stammen. Es ist aber auch möglich, dass das ID-Provider-Computersystem alle Änderungen des einen Nutzers im Hinblick auf einen konkreten Attributwert über die Zeit erfasst und z.B. feststellt, dass der Nutzer besonders häufig (oder besonders selten) innerhalb der letzten 5 Jahre umgezogen ist. Entsprechend wird das durch die erste Funktion berechnete Vertrauensniveau nach Anwendung einer entsprechenden zweiten Funktion, die die Häufigkeit der bisherigen Umzüge des betreffenden Nutzers abbildet, verringert (oder erhöht). Unter einer Korrelationsheuristik wird eine Funktion zur Berechnung eines Vertrauensniveaus eines bestimmten Attributwerts verstanden, welche in Abhängigkeit von einer bekannten positiven oder negativen Korrelation dieses Attributwertes mit anderen Attributwerten des selben oder eines oder mehrerer anderer Attribute das Vertrauensniveau als Ergebnis zurückgibt.

So könnte nach jeder Änderung eines Attributwertes ein attribut- und nutzerspezifischer Zähler erhöht werden und der Zeitpunkt der Attributwert-Änderung durch das ID-Provider-Computersystem erfasst und gespeichert werden. Die zweite Funktion könnte bei Ausführung den Zähler und die gespeicherten Zeitpunkte auswerten und in Abhängigkeit davon das Vertrauensniveau des betreffenden Attributwertes und des betreffenden Nutzers erhöhen oder verringern.

Alternativ oder zusätzlich dazu können ein oder mehrere der zweiten Funktionen bei ihrer Durchführung bewirken, dass in das durch sie neuberechnete Vertrauensniveau eines der Attributwerte des Nutzers ein oder mehrere Attributwerte dieses Attributs und/oder anderer Attribute von einer Vielzahl anderer Personen eingeht. Bei diesen Personen kann es sich um beim ID-Provider-Computersystem registrierte Nutzer handeln. Es kann sich aber auch um eine beliebige andere Gruppe von Personen handeln, die vom ID-Provider-Computersystem oder einer externen Datenquelle als Gruppe definiert wurde (mögliche Kriterien sind z.B. Berufszugehörigkeit, Geschlecht, Alter, Ausbildung, Nationalität, Vorliegen eines Führerscheins, etc.).

Alternativ oder zusätzlich dazu beruht zumindest eine der zweiten Funktionen auf einer nutzergruppenspezifischen Korrelationsheuristik zweier oder mehrerer Attributwerte. Beispielsweise wird bei positiver Korrelation zweier oder mehrerer Attributwerte gemäß einer in einer zweiten Funktion implementierten Korrelationsheuristik das Vertrauensniveau eines ersten Attributwerts erhöht, wenn ein zweiter Attributwert gegeben ist, welcher mit dem ersten Attributwert positiv korreliert, oder wenn der Nutzer zu einer Nutzergruppe oder Personengruppe gehört, von der gemäß der Korrelationsheuristik bekannt ist, dass eine Mitgliedschaft in dieser Gruppe positiv mit dem Auftreten des ersten Attributwertes korreliert. Die Korrelationsheuristik kann von dem ID-Provider-Computersystem automatisch auf den Nutzerdaten erstellt werden und/oder von externen Datenquellen empfangen werden. So könnte eine externe Datenquelle, z.B. ein statistisches Amt, ein Lehrbuch oder eine wissenschaftliche Publikation eine Quelle für eine Korrelationsheuristik darstellen. Wenn diese externe Datenquelle erkennen lässt, dass die Mitgliedschaft zu einer Personengruppe oder das Auftreten eines bestimmten Attributwertes positiv oder negativ mit einem bestimmten anderen Attributwert korreliert, kann dies in einer zweiten Funktion so nachgebildet werden, dass das Vertrauensniveau um so stärker durch die zweite Funktion erhöht wird, je höher die positive Korrelation des entsprechenden Attributwertes mit einer Gruppenzugehörigkeit und/oder einem anderen Attributwert ist.

Nach manchen Ausführungsformen bewirk zumindest eine der zweiten Funktionen nach d) und/oder e) und/oder f) bei ihrer Durchführung, dass das durch sie neuberechnete Vertrauensniveau um so geringer ist, je mehr Zeit vergangen ist, seit das ID-Provider-Computersystem die Attributwerte des Nutzers oder der Vielzahl anderer Nutzer, die in die Berechnung eingehen, empfangen hat.

Nach Ausführungsformen wird die Berechnung der Vertrauensniveaus der ein oder mehreren Attributwerte durch die erste Funktion initiiert durch den Empfang des Attributwertes durch das ID-Provider-Computersystem vom Nutzer oder von einer dem Nutzer zugeordneten Datenverarbeitungsanlage. Alternativ oder zusätzlich dazu wird die Berechnung initiiert durch die Speicherung des Attributwertes durch das ID-Provider-Computersystem oder durch die Feststellung durch das ID-Provider-Computersystem, dass der durch das ID-Provider-Computersystem gespeicherte Attributwert nach dessen Speicherung durch den Nutzer manuell editiert wurde. Dies kann vorteilhaft sein, da festgestellt wurde, dass die technischen Rahmenbedingungen des Datenübertragungs- und Speicherungsprozesses einen Einfluss haben können auf die Vertrauenswürdigkeit der übertragenen/gespeicherten Attribute. Die erste Funktion, die attributunabhängig implementiert ist, sorgt dafür, dass diese technischen Rahmenbedingungen in die berechneten Vertrauensniveaus eingehen.

*Nach Ausführungsformen wird* die Neuberechnung der Vertrauensniveaus initiiert durch ein Triggersignal einer in regelmäßigen Zeitintervallen automatisch ausgeführten Programmroutine. Bei dieser Programmroutine kann es sich beispielsweise um einen cron-job oder dergleichen handeln. Alternativ dazu kann die Neuberechnung der Vertrauensniveaus durch die zweiten Funktionen initiiert werden durch den Empfang der Anfrage. Dabei können selektiv diejenigen zweiten Funktionen identifiziert und durchgeführt werden, die Attributen spezifisch zugeordnet sind, welche in der Anfrage enthalten sind. In anderen Ausführungsformen kann aber auch eine Durchführung aller verfügbaren zweiten Funktionen auf sämtlichen Attributwerten des Nutzers, auf den sich die Anfrage bezieht, oder sogar aller Nutzer, deren Attributwerte durch das ID-Provider-Computersystem verwaltet werden, initiiert werden. Alternativ oder zusätzlich kann die Durchführung der zweiten Funktionen zur Neuberechnung der Vertrauensniveaus auch initiiert werden durch die Speicherung des Attributwertes und des durch die erste Funktion berechneten Vertrauensniveaus durch das ID-Provider-Computersystem.

Nach Ausführungsformen umfasst das Verfahren ferner eine Bereitstellung einer oder mehrerer Schnittstellen durch das ID-Provider-Computersystem. Bei diesen Schnittstellen kann es sich z.B. um verschiedene Dateneingabe- oder Datenübertragungsschnittstellen handeln, z.B. um webbasierte HTML-Formulare, über Sicherheitsdokumente, aus welchen nutzerspezifische Attribute ausgelesen werden können, oder dergleichen. Die Attributwerte eines Nutzers werden über die eine oder die mehreren Schnittstellen durch das ID-Provider-Computersystem empfangen. Dabei erfasst das ID-Provider-Computersystem, welche der einen oder der mehreren Schnittstellen zur Übertragung der empfangenen Attributwerte jeweils verwendet wurde. Die Berechnung der Vertrauensniveaus der Attributwerte durch die erste Funktion umfasst jeweils eine automatische Feststellung, über welche der ein oder mehreren Schnittstellen der Attributwert empfangen wurde. Das berechnete Vertrauensniveau des Attributwertes ist dabei um so höher, je stärker die zur Übertragung des Attributwerts verwendete Schnittstelle gegenüber Datenmanipulation durch den Nutzer und/oder durch Dritte geschützt ist.

Nach Ausführungsformen umfassen die mehreren Schnittstellen eine erste Schnittstelle zur manuellen Eingabe der Attributwerte, z.B. ein HTML Formular, das vom ID-Provider-Computersystem generiert, über ein Netzwerk an ein Nutzer-Computersystem übertragen und in einem Browser des Nutzercomputersystems dargestellt wird. Über die erste Schnittstelle werden die eingegebenen Attributwerte über das Netzwerk an das ID-Provider-Computersystem übertragen. Außerdem umfassen die mehreren Schnittstellen eine zweite Schnittstelle zum Auslesen von einem oder mehreren der Attributwerte aus einem ID-Token über das Netzwerk durch das ID-Provider-Computersystem. Das ID-Token ist dem Nutzer zugeordnet und kann beispielsweise als ein Sicherheitsdokument ausgebildet sein, z.B. als eine Chipkarte die als elektronischer Personalausweis dient.

Das ID-Provider-Computersystem empfängt eine erste Teilmenge der Attributwerte über die erste Schnittstelle und empfängt eine zweite Teilmenge der Attributwerte über die zweite Schnittstelle. Die Berechnung der Vertrauensniveaus durch die erste Funktion erfolgt derart, dass das Vertrauensniveau von über die zweite Schnittstelle empfangenen Attributwerten höher ist als von über die erste Schnittstelle empfangenen Attributwerten. Dies kann vorteilhaft sein, da die erste Schnittstelle eine Manipulation der Attributwerte durch den Nutzer erlaubt, wohingegen dies bei der zweiten Schnittstelle nicht der Fall ist. Die erste Funktion führt dazu, dass dieser Umstand in das berechnete Vertrauensniveau eingeht. Der Schutz vor Datenmanipulation schließt dabei vorzugsweise sowohl die Datenmanipulation durch unberechtigte Dritte wie auch den Nutzer selbst ein, denn auch der Nutzer kann verleitet sein, sich durch Manipulation seiner Daten (Alter, Wohnort, etc.) eine manipulierte digitale Identität zu verschaffen, die ihm Zugang zu einem Dienst gewährt, der ihm andernfalls nicht zugänglich gemacht würde. Das Mieten von Autos über einen Car-Sharing-Dienst hat beispielsweise neben Volljährigkeit auch den Besitz eines gültigen Führerscheins zur Voraussetzung und der Car-Sharing-Dienst weist ein Auto nur dann einem anfragenden Nutzer zu, wenn diese Voraussetzungen zutreffen und das Sicherheitsniveau dieser Attributwerte auch mit hinreichender Wahrscheinlichkeit garantiert, dass weder der Nutzer noch ein Anderer diese Attributwerte manipulieren konnte.

Die Bereitstellung mehrerer Schnittstellen kann vorteilhaft sein, da die Datenakquise durch das ID-Provider-Computersystem dadurch erleichtert wird. Auch Schnittstellen, die bisher als wenig vertrauenswürdig galten, wie etwa Schnittstellen zur manuellen Dateneingabe, werden genutzt, ohne das Vertrauensniveau der digitale Identität insgesamt notwendigerweise zu reduzieren, denn die Attributwerte, die über die erste Schnittstelle empfangen wurden, erhalten zwar ein niedrigeres Vertrauensniveau, dadurch sind jedoch die über eine andere Schnittstelle empfangenen Attribute nicht betroffen. Für manche Dienste mag ein geringes Vertrauensniveau mancher Attributwerte ja akzeptabel sein.

Nach Ausführungsformen umfasst das Verfahren ferner:
- Speicherung der Attributwerte und der diesen zugeordneten, durch die erste Funktion berechneten Vertrauensniveaus durch das ID-Provider-Computersystem;
- Bereitstellung einer Schnittstelle an den Nutzer zur Ermöglichung des manuellen Editierens der gespeicherten Attributwerte; der Nutzer kann also die einmal durch das ID-Provider-Computersystem empfangenen und gespeicherten Daten editieren unabhängig davon, über welche Schnittstelle diese Attributwerte ursprünglich empfangen wurden;
- Im Falle des manuellen Editierens eines der Attributwerte, automatische erneute Berechnung des Vertrauensniveaus des editierten Attributwertes durch die erste Funktion derart, dass der Umstand, dass der Attributwert über die Schnittstelle zum manuellen Editieren verändert wurde, in die erneute Berechnung des Vertrauensniveaus eingeht; dies kann z.B. beinhalten, dass das Vertrauensniveau für den editierten Attributwert so berechnet wird, als wäre er über die erste Schnittstelle empfangen worden.

Dies kann vorteilhaft sein, da dies dem Nutzer auf eine einfache Weise eine Aktualisierung seiner Attributwerte ermöglicht, wie dies etwa im Hinblick auf die Wohnadresse ja oftmals vorkommt. Der Nutzer kann seine Attributwerte also editieren unabhängig davon, ob diese ursprünglich durch manuelle Eingabe oder durch automatisches Auslesen aus einem ID-Token wie etwa einem elektronischen Personalausweis an das ID-Provider-Computersystem übertragen wurden. Falls er dies jedoch für Attributwerte tut, die ursprünglich über eine manipulationssichere Schnittstelle an das ID-Provider-Computersystem übertragen wurden, wird das Vertrauensniveau der editierten Attribute automatisch entsprechend herabgesetzt. Möchte der Nutzer dies vermeiden, kann er auf entsprechend sicherere Datenübertragungsverfahren und Schnittstellen zur Aktualisierung seiner Daten zurückgreifen.

Die Schnittstellen können beispielsweise aus einer GUI, die dem Nutzer das Editieren, Ergänzen und Löschen bereits durch das ID-Provider-Computersystem gespeicherter Daten ermöglicht (z.B. in einem über das Internet bereitgestellten HTML-Formular bzw. Editor-Maske) und einer Schnittstelle zum automatischen Auslesen nutzerspezifischer Attributwerte aus einem ID-Token des Nutzers bestehen. Eine Schnittstelle zum automatischen Auslesen von Daten aus einem ID-Token schützt die Daten sowohl vor der Manipulation durch unberechtigte Dritte als auch vor Manipulation durch den Nutzer, zumindest bei Typen von ID-Token, bei welchen der Nutzer seine darin gespeicherten Daten nicht oder nicht ohne Zustimmung einer vertrauenswürdigen Instanz verändern kann.

Nach Ausführungsformen authentifiziert sich der Nutzer gegenüber dem ID-Provider-Computersystem mittels eines Authentifizierungsverfahrens, um nach erfolgreicher Authentifizierung Attributwerte an das ID-Provider-Computersystem zu übertragen oder Attributwerte zu editieren, die bereits in einem an das ID-Provider-Computersystem operativ gekoppelten Speichermedium gespeichert sind. Im Falle einer erfolgreichen Authentifizierung erfasst das ID-Provider Computersystem für jedes der übertragenen oder editierten Attributwerte automatisch, welches Authentifizierungsverfahren durchgeführt wurde. Falls der Nutzer sich also beispielsweise über ein passwortbasiertes Verfahren authentifiziert hat, um einen Wert V_{A} eines Attributs A zu editieren, wird der editierte Wert V_{A} verknüpft mit einer Kennung des passwortbasierten Authentifizierungsverfahrens gespeichert. Es ist auch möglich, dass hier nur in generischer Weise zwischen zwei oder drei verschiedenen Authentifizierungsverfahren unterschieden wird, insbesondere zwischen wissensbasierten, besitzbasierten und/oder merkmalsbasierten Authentifizierungsverfahren. Die Verlässlichkeit der Zuordnung des Attributwertes zu dem Nutzer hängt von dem verwendeten Authentifizierungsverfahren ab. Die durch die erste Funktion berechneten Vertrauensniveaus der Attributwerte sind umso höher, je höher die Sicherheitsanforderungen des zur Übertragung oder zum Editieren des Attributwertes jeweils verwendeten Authentifizierungsverfahrens sind. Falls mehrere Authentifizierungsverfahren erforderlich sind um vom ID-Provider-Computersystem verwaltete Attributwerte zu modifizieren oder diese überhaupt erst an das ID-Provider-Computersystem zu übertragen, kann auch die Anzahl der durchlaufenen Authentifizierungsverfahren in die Berechnung der Vertrauensniveaus eingehen.

Die automatische Berücksichtigung des verwendeten Authentifizierungsverfahrens kann die Exaktheit der berechneten Vertrauensanker weiter steigern. Bisherige Systeme hatten es Nutzern von vornherein unmöglich gemacht, Attribute mittels unsicherer Authentifizierungsverfahren und/oder Datenmanipulationsschnittstellen nachträglich zu ändern um die Vertrauenswürdigkeit der digitalen Identität des Nutzers hoch zu halten. Mit den vorliegenden Merkmalen ist eine solche Manipulation möglich, reduziert aber selektiv das Vertrauensniveau der betroffenen Attributwerte.

Nach Ausführungsformen stellt das ID-Provider-Computersystem eine Vielzahl von Authentifizierungssystemen bereit, welche zumindest zwei der folgenden Authentifizierungsverfahren umfasst:
- wissensbasierte Authentifizierungsverfahren beruhend z.B. auf einem Passwort oder einer PIN und/oder TAN;
- besitzbasierte Authentifizierungsverfahren beruhend z.B. auf einem ID-Token, z.B. einem Sicherheitsdokument;
- merkmalsbasierte Authentifizierungsverfahren, beruhend z.B. auf biometrischen Daten wie etwa Iris-Scans, Fingerprints, etc.
Die Berechnung der Vertrauensniveaus durch die erste Funktion erfolgt derart, dass die Vertrauensniveaus um so höher sind, je mehr der besagten Authentifizierungsverfahren kumulativ zur Authentifizierung eines Nutzers gegenüber dem ID-Provider-Computersystem erforderlich sind.

Nach Ausführungsformen geht in die Berechnung der Vertrauensniveaus der Attributwerte durch die erste Funktion jeweils ein Sicherheitsgrad ein. Bei dem Sicherheitsgrad handelt es sich um einen Sicherheitsgrad der technischen Infrastruktur und/oder der organisatorischen Infrastruktur des ID-Provider-Computersystems, welche bei der Berechnung des Vertrauensniveaus eines Attributwertes durch das ID-Provider-Computersystem verwendet wird. Die Integrität des Attributwertes und/oder der Identität des Nutzers und/oder die Verlässlichkeit auf die Richtigkeit der Zuordnung von Attributwert und Nutzer werden durch den Sicherheitsgrad der technischen und/oder organisatorischen Infrastruktur bestimmt.

Nach Ausführungsformen authentifizieren sich ein dem Nutzer zugeordneter ID-Token, z.B. ein Sicherheitsdokument, und das ID-Provider-Computersystem zunächst gegenseitig. Nach erfolgreicher gegenseitiger Authentifizierung führt das ID-Provider-Computersystem einen Lesezugriff auf ein oder mehrere in dem ID-Token gespeicherte Attributwerte durch. Die ein oder mehreren gelesenen Attributwerte werden durch das ID-Provider-Computersystem signiert. Die Antwort des ID-Provider-Computersystems beinhaltet ein Zertifikat, welches einen öffentlichen Schlüssel des ID-Provider-Computersystems enthält. Das Zertifikat erlaubt dem Dienst-Computer eine Prüfung der Signatur der von dem ID-Provider-Computersystem aus dem ID-Token gelesenen Attribute. Dies kann vorteilhaft sein, da das Dienst-Computersystem prüfen kann, ob auch das ID-Provider-Computersystem vertrauenswürdig ist. Die gegenseitige Authentifizierung kann durch das ID-Provider-Computersystem in Reaktion auf den Empfang der Anfrage des Dienst-Computersystems initiiert werden.

In einem weiteren Aspekt betrifft die Erfindung ein computerimplementiertes Verfahren zur Bestätigung einer digitalen Identität eines Nutzers gegenüber einem Dienst-Computersystem. Das Verfahren wird von einem ID-Provider-Computersystem ausgeführt und umfasst:
- automatische Berechnung von Vertrauensniveaus jeweils für Attributwerte von Attributen mit Hilfe einer ersten Funktion, wobei die erste Funktion die Vertrauensniveaus in attributunabhängiger Weise berechnet, wobei die digitale Identität des Nutzers mehrere der Attributwerte beinhaltet, wobei das Vertrauensniveau einen Grad der Verlässlichkeit der Zuordnung des jeweiligen Attributwertes zu dem Nutzer und/oder den Grad der Verlässlichkeit auf die Richtigkeit des Attributwertes angibt;
- automatische Durchführung von mehreren zweiten Funktionen, wobei jede der zweiten Funktionen einem oder mehreren der Attribute spezifisch zugeordnet ist, wobei die Durchführung der zweiten Funktionen jeweils eine Neuberechnung der Vertrauensniveaus der Attributwerte derjenigen Attribute bewirkt, denen die zweite Funktion zugeordnet ist;
- Empfang einer Anfrage zur Bestätigung der digitalen Identität des Nutzers von dem Dienst-Computersystem über ein Netzwerk, wobei die Anfrage mehrere der Attribute enthält;
- Senden einer Antwort an das Dienst-Computersystem über das Netzwerk, wobei die Antwort für mehrere der Attribute der Anfrage jeweils zumindest einen dem Nutzer zugehörigen Attributwert und das diesem Attributwert zugeordnete und mittels einer der zweiten Funktionen neuberechnete Vertrauensniveau beinhaltet, wobei die Vertrauensniveaus ihrem jeweiligen Attributwert als Metainformation zugeordnet sind.

In einem weiteren Aspekt betrifft die Erfindung ein ID-Provider-Computersystem mit einer Netzwerkschnittstelle, einem Prozessor und einem computerlesbaren Speichermedium. In dem Speichermedium sind computerinterpretierbare Instruktionen gespeichert, welche bei Ausführung durch den Prozessor dazu in der Lage sind, ein Verfahren zur Bestätigung einer digitalen Identität eines Nutzers gegenüber einem Dienst-Computersystem wie im vorigen Textabschnitt beschrieben bereitzustellen.

In einem weiteren Aspekt wird hier ein computerimplementiertes Verfahren zur Prüfung einer digitalen Identität eines Nutzers durch ein Dienst-Computersystem offenbart, wobei das Verfahren von dem Dienst-Computersystem ausgeführt wird. Es umfasst:
- Senden einer Anfrage zur Bestätigung der digitalen Identität des Nutzers über ein Netzwerk an ein ID-Provider-Computersystem, wobei die Anfrage ein oder mehrere Attribute enthält, wobei die digitale Identität des Nutzers ein oder mehrere der Attributwerte dieser Attribute beinhaltet;
- Erhalt einer Antwort auf die Anfrage durch das Dienst-Computersystem von dem ID-Provider-Computersystem über das Netzwerk, wobei die Antwort einen Attributwert für ein oder mehrere der in der Anfrage enthaltenen Attribute umfasst, wobei jeder der Attributwerte dem Nutzer zugeordnet ist, wobei die Antwort für ein oder mehrere der Attributwerte jeweils ein Vertrauensniveau umfasst, wobei das Vertrauensniveau jeweils einen Grad der Verlässlichkeit der Zuordnung des Attributwertes zu dem Nutzer und/oder den Grad der Verlässlichkeit auf die Richtigkeit des Attributwertes angibt; und
- Prüfung der digitalen Identität des Nutzers durch automatische Auswertung sowohl der in der Antwort enthaltenen Attributwerte als auch der diesen jeweils zugeordneten Vertrauensniveaus.

Nach Ausführungsformen spezifiziert die Anfrage für ein oder mehrere der in der Anfrage enthaltenen Attribute ein Mindestvertrauensniveau. Falls einem der in der Anfrage enthaltenen Attribute ein Attributwert mit zumindest dem Mindestvertrauensniveau zugeordnet ist, beinhaltet die Antwort diesen ermittelten Attributwert. Falls einem der in der Anfrage enthaltenen Attribute kein Attributwert mit zumindest dem Mindestniveau zugeordnet ist, beinhaltet die Antwort keinen Attributwert für dieses Attribut. Zusätzlich oder alternativ dazu sendet das ID-Provider-Computersystem eine Warnmeldung über die Nichtverfügbarkeit eines Attributwertes mit dem geforderten Mindestniveau im Hinblick auf das eine Attribut an das Dienst-Computersystem.

Dies kann vorteilhaft sein, da das Dienst-Computersystem in die Lage versetzt wird, seine speziellen Sicherheitsbedürfnisse individuell für einzelne Attribute zu spezifizieren. Durch die Mindestvertrauensniveaus als Bestandteil der Anfrage kann dynamisch eine neue digitale Identität des Nutzers nach Bedarf definiert und vom ID-Provider-Computersystem entsprechend assembliert werden. Die in der Antwort zurückgegebenen Attributwerte des Nutzers werden vorzugsweise durch das ID-Provider-Computersystem unabhängig davon ermittelt, von welcher Quelle (Nutzer selbst, ID-Token des Nutzers oder ein weiteres Dienst-Computersystem) die Attributwerte ursprünglich stammen und an das ID-Provider-Computersystem übermittelt wurden. Somit kann z.B. aus einer Vielzahl von Attributen, die aus verschiedenen Quellen mit unterschiedlichen Vertrauensniveaus stammen (Nutzer, ID-Token, andere Dienst-Computersysteme, bei denen sich der Nutzer bereits registriert hat und dort seine Daten in mehr oder weniger sicherer Form hinterlegt hat) eine neue digitale Identität des Nutzers auf Anfrage auch für Dienste bereitgestellt werden, bei denen sich der Nutzer noch nicht registriert hat, aber deren Vertrauensanforderungen im Hinblick auf die für diesen Dienst relevanten Attribute so beschaffen sind, dass sie von den Attributwerten, die dem ID-Provider-Computersystem bereits vorliegen, erfüllt sind. Bei der erfindungsgemäßen Berechnung der jeweiligen Vertrauensniveaus mit der ersten Funktion kann die Herkunft der Attributwerte allerdings durchaus eine Rolle spielen.

Nach Ausführungsformen sind die Attribute der Anfrage in einer standardisierten Terminologie, auf die sich das ID-Provider-Computersystem und eine Vielzahl von Dienst-Computersystemen geeinigt haben, spezifiziert. Diese Terminologie kann aus einem einfachen, standardisierten Thesaurus bestehen, aber auch in komplexen Ontologien spezifiziert sein, z.B. mittels RDF-Schema, Web Ontology Language (OWL), Web Service Modeling Language (WSML) oder Topic Maps (ISO/IEC 13250:2000).
Außerdem kann das ID-Provider-Computersystem nach manchen Ausführungsformen eine Schnittstelle für die Dienst-Computersysteme anbieten, um Attributwerte eines Nutzers, die gemäß dieser standardisierten Terminologie spezifiziert sind, an das ID-Provider-Computersystem zu übertragen Diese Attributwerte können z.B. im Zuge einer Registrierung des Nutzers bei dem Dienst oder einer Verifikation der Attributwerte des Nutzers durch den Dienst erfolgen. Die Verwendung eines standardisierten Thesaurus bzw. einer standardisierten Ontologie stellt sicher, dass Attributwerte, die von einem bestimmten Dienst verarbeitet, dem ID-Provider-Computersystem zur Verfügung gestellt oder von dem ID-Provider-Computersystem abgefragt und empfangen werden, ggf. auch durch andere Dienst-Computer verwendet werden können, um eine durch das ID-Provider-Computersystem dynamisch assemblierte digitale Identität des Nutzers zu empfangen.

Nach Ausführungsformen ermittelt das ID-Provider-Computersystem für eines der in der Anfrage enthaltenen Attribute mehrere Attributwerte mit zumindest dem Mindestvertrauensniveau. Das ID-Provider-Computersystem stellt fest, ob es sich in einem ersten oder zweiten Konfigurationszustand befindet. Falls sich das ID-Provider-Computersystem im ersten Konfigurationszustand befindet, beinhaltet die Antwort des ID Provider Computersystems diejenigen Attributwerte und deren Vertrauensniveaus, welchen das höchste Vertrauensniveau von den mehreren Attributwerten dieses Attributs zugeordnet ist. Falls sich das ID-Provider-Computersystem im zweiten Konfigurationszustand befindet, beinhaltet die Antwort des ID Provider Computersystems diejenigen Attributwerte und deren Vertrauensniveaus, welchen das geringste Vertrauensniveau von den mehreren Attributwerten dieses Attributs zugeordnet ist, und welches aber dennoch zumindest dem Mindestniveau genügt. Die Konfiguration kann dem einzelnen Nutzer überlassen sein, wobei die Konfiguration dann nutzerspezifische Wirkung hat, oder einem Administrator des ID-Provider-Computersystems.

Dies kann vorteilhaft sein, da das ID-Provider-Computersystem die angeforderte digitale Identität des Nutzers im Hinblick auf zwei unterschiedliche Erfordernisse ausrichten kann: soll vor allem das Interesse des Dienstes berücksichtigt werden, so kann für jedes angeforderte Attribut derjenige Attributwert zurückgeliefert werden, der das höchste Vertrauensniveau besitzt. Da pro Attribut auch mehrere Attributwerte für einen Nutzer vorliegen können (die z.B. auf unterschiedlichen Wegen, von unterschiedlichen weiteren Dienst-Computersystemen oder nach unterschiedlich sicheren Authentifizierungsverfahren an das ID-Provider-Computersystem übermittelt wurden), wird so sichergestellt, dass immer die Attributwerte zurückgegeben werden, die das höchste Vertrauensniveau besitzen, um dem Dienst die größtmögliche Verlässlichkeit im Hinblick auf die Vertrauenswürdigkeit der einzelnen Attribute zu bieten.

Soll dagegen vor allem das Interesse des Nutzers am Schutz seiner Daten Vorrang haben, wird dann, wenn mehrere Attributwerte für das gleiche angefragte Attribut zur Verfügung stehen, derjenige Attributwert in der Antwort zurückgegeben, dem das niedrigste Vertrauensniveau zugewiesen ist, welches allerdings das angeforderte Mindestvertrauensniveau noch erfüllen muss. Attributwerte mit niedrigem Vertrauensniveau können beispielsweise Attributwerte sein, die der Nutzer willentlich manipulieren kann oder konnte. Bei solchen Attributwerten muss damit gerechnet werden, dass der Nutzer hier willentlich oder unwillentlich (Tippfehler) falsche Daten angibt. Dieses Vorgehen ist in vielen Fällen durchaus gerechtfertigt, da beispielsweise manche Online-Dienste einen Nutzer zwingen, eine Vielzahl von Daten preiszugeben, damit ein Online-Formular als ,ausgefüllt' gilt und abgeschickt werden kann, auch wenn diese Daten mit der Erbringung des Dienstes eigentlich wenig zu tun haben. Dadurch, dass der Attributwert mit dem niedrigst möglichen, vom Dienst noch akzeptierten Vertrauensniveau zurückgegeben wird, kann der Datenschutz gefördert werden: ein Online-Shop hat beispielsweise schon anhand der vorliegenden Kreditkartennummer eine verlässliche Information darüber, dass ein Nutzer volljährig und voll geschäftsfähig ist, möchte jedoch zusätzlich noch das genaue Alter für Werbezwecke erfragen. Der Online-Shop kann das Alter des Nutzers als Attribut in die Anfrage an den ID-Provider-Computersystem integrieren, kann aber durch die Wahl eines sehr niedrigen Sicherheitsniveaus für diese Angabe sicherstellen, dass die angestrebte Transaktion, also z.B. ein Kaufvertrag, nicht daran scheitern wird, dass der Nutzer sein wirkliches Alter nicht preisgeben will. Das erforderliche Mindestniveau könnte dem Nutzer eine Manipulation des Attributs ermöglicht haben. Der Dienst wird in so einem Fall von Nutzern, die ohne Bedenken ihr Alter preisgeben möchten, deren reales Alter erfahren. Von Nutzern die dies aus Datenschutzgründen nicht möchten, wird der Dienst nur eine unzuverlässige, da vom Nutzer manipulierbare, Altersangabe erhalten, so dass beiden Seiten gedient ist.

Die Antwort ist nach manchen Ausführungsformen als SAML-Response ausgestaltet. Die Metadaten, die den ein oder mehreren Attributwerten zugeordnet sind, sind jeweils Teil einer SAML-Assertion. Die Vertrauensniveaus der ein oder mehreren Attributwerte sind in der SAML-Assertion jeweils in Form eines speziellen Attributtyps kodiert. Der spezielle Attributtyp gehört dabei zu einer Menge von ein oder mehreren speziellen Attributtypen, die zwischen dem ID-Provider-Computersystem und einem oder mehreren Dienst-Computersystemen vereinbart wurden. Die zwischen dem ID-Provider-Computersystem und dem Dienst-Computersystem vereinbarte Attributtyp könnte also "Vertrauensniveau" heißen und auf lediglich vier mögliche Attributwerte "L1" - "L4" beschränkt sein. Alternativ sind auch gröbere oder noch feinere Aufschlüsselungen möglich.
Die Spezifikation als Attributtyp von SAML-Assertions kann vorteilhaft sein, da auf diese Weise die Anfrage und die Antwort standardkonform bleibt und damit leicht in bestehende Strukturen für den Identitätsnachweis gegenüber Dienst-Computersystemen integrierbar ist. Im Folgenden sollen zwei alternative Spezifikationsmöglichkeiten innerhalb einer SAML2.0 Assertion beispielhaft dargestellt sein. Hervorhebungen dienen lediglich der besseren Lesbarkeit:

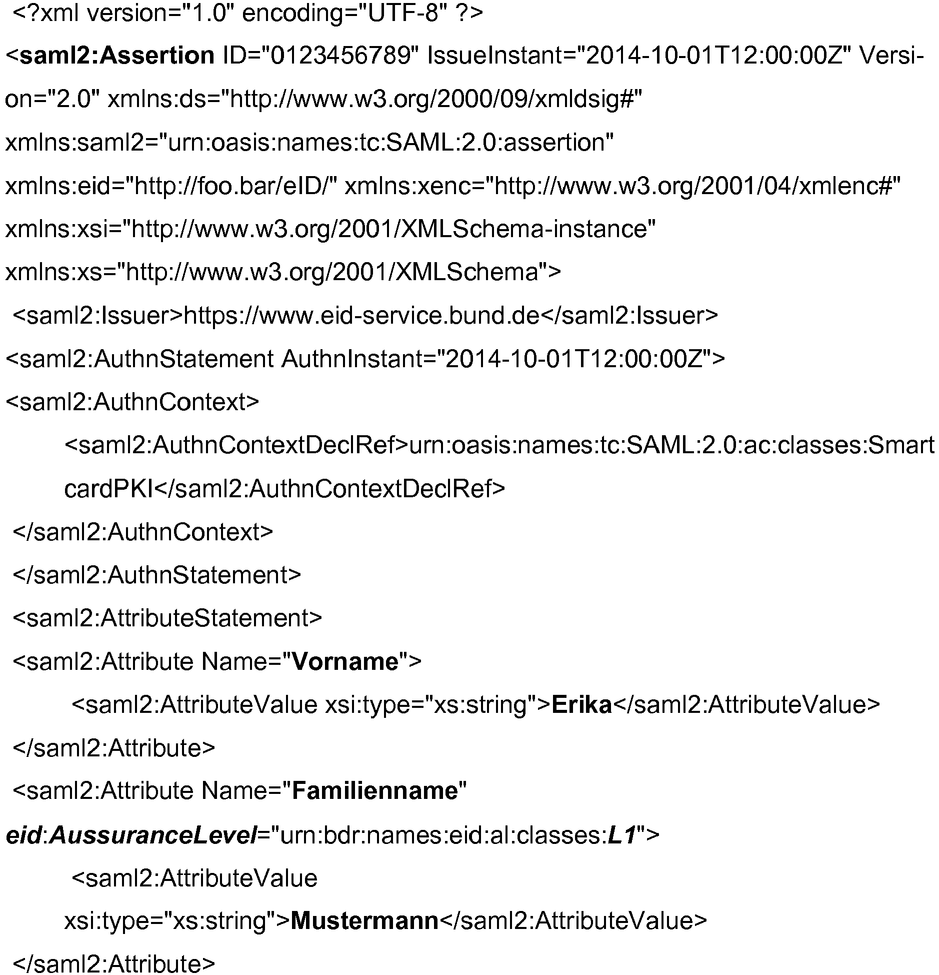

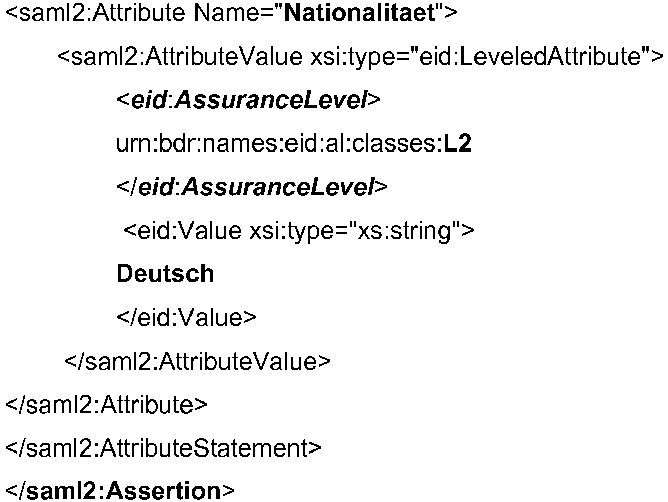

Gemäß einer ersten Möglichkeit wird das Vertrauensniveau "L1" für den Attributwert "Mustermann" des Attributs "Familienname" als zusätzliches XML Attribut innerhalb des Attribute-Elements für Familienname spezifiziert. Dies ist vorteilhaft, da diese Spezifikationsform standardkonform ist, der SAML2.0 Standard muss also nicht erweitert werden.

Gemäß einer alternativen Möglichkeit, die hier der Einfachheit halber innerhalb der gleichen SAML2.0 Assertion dargestellt ist, wird das Vertrauensniveau "L2" für den Attributwert "Deutsch" des Attributs "Nationalitaet" dadurch spezifiziert, dass das Vertrauensniveau als zusätzliches XML-Kind-Element des Attribut-Elements "Nationalitaet" spezifiziert wird. Auch der entsprechende Attributwert "Deutsch" wird zum Kind-Element.

Somit ist es möglich, existierende, auf SAML-basierende Systeme zum Nachweis der digitalen Identität eines Nutzers so zu erweitern, dass auch attributspezifische Vertrauensniveaus unterstützt werden, ohne hierfür den SAML2.0 Standard erweitern und/oder die existierenden Systeme grundlegend umgestalten zu müssen.

Die SAML-Antwort sollte mit einem Zertifikat des ID-Provider-Computersystems signiert sein und einen Prüfschlüssel enthalten.

Nach Ausführungsformen wird die Berechnung der Vertrauensniveaus der Attributwerte in Reaktion auf den Empfang der Anfrage durchgeführt. Alternativ dazu kann die Berechnung der Vertrauensniveaus der Attributwerte auch vor dem Empfang der Anfrage durchgeführt werden, z.B. im Moment des Empfangs der Attributwerte von dem Nutzer oder einem externen Datenverarbeitungsgerät. Das ID-Provider-Computersystem speichert schließlich die ein oder mehreren Attributwerte verknüpft mit den jeweils berechneten Vertrauensniveaus in einer Datenbank.
Dies kann vorteilhaft sein, da das ID-Provider-Computersystem am akkuratesten bestimmen kann, wie vertrauenswürdig die eigene technische und organisatorische Infrastruktur ist, wie sicher die verwendeten Datenübertragungswege zum Empfang der Attributwerte sind, und ob ggf. noch weitere Faktoren vorliegen, die die Vertrauenswürdigkeit von Attributwerten beeinflussen. Eine Berechnung der Vertrauensniveaus unmittelbar nach Empfang der Anfrage kann so geschehen, dass selektiv nur die Vertrauensniveaus der Attributwerte desjenigen Nutzers berechnet werden, auf welchen sich die Anfrage bezieht. Dies kann den Vorteil haben, dass Rechenkapazitäten geschont werden, denn möglicherweise hat das ID-Provider-Computersystem eine Vielzahl von Attributwerten gespeichert, die niemals von einem Dienst zum Nachweis der digitalen Identität angefordert werden oder sich öfter ändern und neuberechnet werden müssten als sie angefragt werden. Alternativ kann die Berechnung auch bei Empfang der Attributwerte stattfinden. Falls die Attributwerte eines Nutzers oder die Attributwerte verschiedener Nutzer von dem ID-Provider-Computersystem über einen Zeitraum zufallsverteilt empfangen werden, wird auch die Rechenlast zufallsverteilt gestreut und Lastspitzen werden vermieden.

Das Sicherheitsniveau eines Attributwerts kann z.B. berechnet werden durch die erste Funktion unter Verwendung der folgenden Inputdaten: einem Indikator der zur Übertragung oder zum Editieren des Attributwerts verwendeten Schnittstelle; einem Indikator des für die Übertragung oder für das Editieren des Attributwerts verwendeten Authentifizierungsverfahrens; einem Indikator des Sicherheitsgrades der oben erwähnten technischen und/oder organisatorischen Infrastruktur; und/oder einem Indikator des Betreibers des ID-Provider-Computersystems oder eines weiteren Dienst-Computersystems, von welchem die durch das ID-Provider-Computersystem ermittelten Attributwerte empfangen wurden. Jedes der Vertrauensniveaus besteht aus einer Menge von ein oder mehreren der oben genannten Indikatoren oder besteht alternativ dazu aus einem einzelnen Datenwert, welcher einer vordefinierten Sicherheitsstufe aus einer Menge von vordefinierten Sicherheitsstufen entspricht und aus einem oder einer beliebigen Kombination der oben genannten Indikatoren abgeleitet ist.

Auch das Mindestvertrauensniveau eines Attributwerts kann in entsprechender Form spezifiziert sein, also z.B. in Form eines Indikators einer oder mehrerer Schnittstellen, die zur Übertragung oder zum Editieren des Attributwerts verwendet wurden und als hinreichend sicher gegen Datenmanipulation gelten; eines Indikators einer oder mehrerer für die Übertragung oder für das Editieren des Attributwerts verwendeten Authentifizierungsverfahrens, die als hinreichend sicher gelten; eines Indikators eines mindestens erforderlichen Sicherheitsgrades der oben genannten technischen und/oder organisatorischen Infrastruktur; oder eines Indikators eines als vertrauenswürdig geltenden ID-Provider-Computersystems oder weiteren Dienst-Computersystemen, die dem ID-Provider-Computersystem als Quelle der Attributwerte dienten. Das Mindestvertrauensniveau ist spezifiziert als ein einzelner Datenwert, welcher einer vordefinierten Sicherheitsstufe aus einer Menge von vordefinierten Sicherheitsstufen entspricht und aus einem oder mehreren der oben genannten Indikatoren abgeleitet ist, also beispielsweise "L1" für "Basis-Vertrauensniveau", "L2" für "Standard-Vertrauensniveau", "L3" für "erhöhtes Vertrauensniveau und "L4", "L5" usw. für "sehr hohes" oder "höchstes" Vertrauensniveau. Alternativ dazu kann das Mindestvertrauensniveau auch aus einer Kombination mehrerer der oben genannten Indikatoren bestehen. Das Mindestvertrauensniveau in der Anfrage kann zusätzlich ein maximales Alter beinhalten, das spezifiziert, wie viel Zeit seit der letzten Speicherung oder Verifikation (Prüfung auf Korrektheit des Attributwerts und dessen korrekter Zuordnung zu dem Nutzer) des Attributwerts durch das ID-Provider-Computersystem maximal vergangen sein darf. Überschreitet ein Attributwert dieses Alter, verfährt das ID-Provider-Computersystem so, als würde dessen Vertrauensniveau das Mindestvertrauensniveau nicht erreichen.

Im Weiteren werden Ausführungsformen der Erfindung mit Bezugnahme auf die Zeichnungen näher erläutert. Es zeigen:
- Figur 1: ein Blockdiagramm eines mit einem Dienst-Computersystem verbundenen ID-Provider-Computersystems,
- Figur 2: ein Blockdiagramm eines Anfrage-Antwort Zyklus unter Berücksichtigung eines Mindestvertrauensniveaus,
- Figur 3: ein Blockdiagramm eines verteilten Systems zum Identitätsnachweis eines Nutzers gegenüber einem Dienst,
- Figur 4: eine Tabelle mit möglichen Inputwerten zur Berechnung der Vertrauensniveaus, und
- Figur 5: ein Flussdiagramm eines Verfahrens zur Prüfung einer digitalen Identität.

Elemente der nachfolgenden Ausführungsformen, die einander entsprechen, werden mit denselben Bezugszeichen gekennzeichnet.

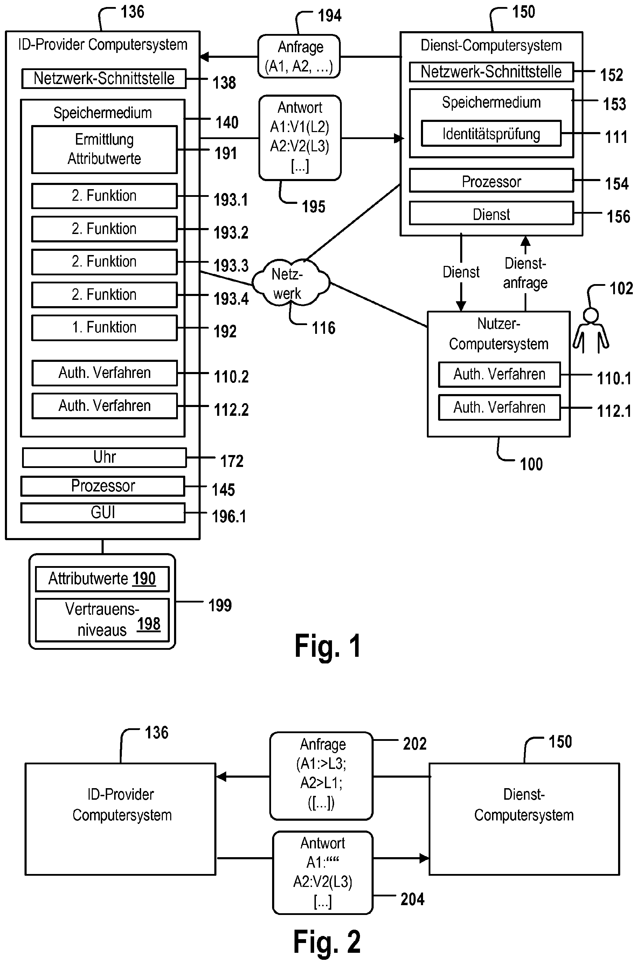

**Figur** 1 zeigt ein verteiltes Computersystem umfassend ein Dienst-Computersystem 150 und ein ID-Provider-Computersystem 136, welches es einem Nutzer 102 ermöglicht, sich mithilfe seines Nutzer-Computersystems 100 gegenüber dem Dienst-Computersystem als berechtigt auszuweisen, also sich seine digitale Identität bestätigen zu lassen, und den Dienst 156 in Anspruch zu nehmen. Der Dienst 156 kann beispielsweise ein KFZ-Verleih sein. Der Kfz-Verleih stellt ein HTML Formular, zum Beispiel als Bestandteil eines Web-Portals, bereit, welches in einem Browser des Nutzer-Computersystems dargestellt werden kann. Nutzer, welche sich bereits in der Vergangenheit bei dem Kfz-Verleih registriert haben, bekommen über dieses Formular die Möglichkeit, sich beispielsweise mittels Nutzername und Passwort gegenüber dem Dienst 156 zu authentifizieren. Der Registrierungsprozess beinhaltet typischerweise die Vorlage eines Personalausweises und eines gültigen Führerscheins. Durch Eingabe des bei der Registrierung festgelegten Nutzernamens und Passworts stellt der Nutzer 102 seine digitale Identität gegenüber dem Dienst-Computersystem unter Beweis, die im vorliegenden Fall etwa besteht aus dem Namen des Nutzers, seiner Anschrift, das Vorliegen eines gültigen Führerscheins und Volljährigkeit.

Um auch Nutzern, die sich noch nicht bei dem Kfz-Verleih registriert haben, aber beispielsweise ihre digitale Identität mit allen für den Kfz-Verleih relevanten Angaben (Adresse, Führerschein, Volljährigkeit) bei einem ID-Provider-Computersystem in hinreichend sicherer Form nachgewiesen und dort hinterlegt haben (etwa im Zuge einer Registrierung bei einem anderen Kfz-Verleih, im Zuge des Führerschein-Erwerbs etc.) die Nutzung des Dienstes 156 ohne aufwändigen Registrierungsprozess spontan zu ermöglichen, beinhaltet das Dienst-Computersystem 150 eine Schnittstelle 152 zum Datenaustausch mit dem ID-Provider-Computersystem 136, um dem Nutzer 102 zusätzlich oder alternativ zu dem HTML Formular den Nachweis seiner digitalen Identität und damit eine Authentifizierung mit Hilfe des ID-Provider-Computersystems zu ermöglichen. Durch Klick auf einen Button oder ein anderes Element der Web-Seite des Dienst-Computersystems kann der Nutzer beispielsweise bewirken, dass das Dienst-Computersystem 150 eine Anfrage 194 an das ID-Provider-Computersystem sendet. Die Anfrage 194 enthält alle Attribute A1, A2,..., deren Kenntnis durch das Dienst-Computersystem als notwendig angesehen wird, um dem Nutzer 102 den Dienst 156 bereitzustellen, also dem Nutzer beispielsweise Zugang zu einem bestimmten Kfz zu gewähren. Diese in der Anfrage enthaltenen Attribute A1, A2 machen im Hinblick auf Dienst 156 die digitale Identität des Nutzers 102 aus.
Außerdem kann das ID-Provider-Computersystem eine graphische Benutzeroberfläche 196.1 über das Netzwerk 116 an den Nutzer 102 zur Verfügung zu stellen um dem Nutzer zu ermöglichen, zumindest einige der für ihn gespeicherten Attributwerte 190 nachträglich manuell zu bearbeiten.

Das ID-Providercomputersystem empfängt über die Schnittstelle 138 die Anfrage 194 und führt mit dem Prozessor 145 Programmlogik aus, die auf dem Speichermedium 140 gespeichert ist. Die Programmlogik beinhaltet ein Modul 191 zur Ermittlung derjenigen Attributwerte V1, V2 aus einer Menge von nutzerspezifischen Attributwerten 190 mehrerer Nutzer, die dem Nutzer 102 zugeordnet sind und die sich auf in der Anfrage 194 enthaltene Attribute A1, A2,..., beziehen. Bei dieser Gelegenheit werden außerdem attributspezifische Vertrauensniveaus L1-L5, 198, die den besagten Attributwerten zugeordnet sind, ermittelt. Die Vertrauensniveaus sind in einem nicht-flüchtigen Speicher 199, zum Beispiel mittels einer relationalen Datenbank, gespeichert. Die Vertrauensniveaus können ihrem jeweiligen Attributwert im Speicher 199 als Metadaten zugeordnet sein. Unter "Metadaten" sind hierbei Daten zu verstehen, die Informationen über Merkmale anderer Daten enthalten, aber nicht diese Daten selbst.

Für die Berechnung der einzelnen Vertrauensniveaus 198 verfügt das ID-Provider Computersystem 136 über eine erste Funktion 192, die für eine Vielzahl von Attributwerten 190 jeweils in attributunabhängiger Weise entsprechende Vertrauensniveaus berechnet, z.B. im Zuge der Speicherung oder Änderung der Attributwerte 190 in dem Speichermedium 199. Außerdem verfügt das ID-Provider-Computersystem über mehrere zweite Funktionen 193.1-193.4 die jeweils einem bestimmten Attribut zugeordnet sind und in attributspezifischer Weise, z.B. basierend auf einer Korrelationsheuristik, die von der ersten Funktion berechneten Vertrauensniveaus nach oben oder unten korrigieren. Die Korrelationsheuristiken können von dem ID-Provider-Computersystem automatisch durch Analyse der Gesamtheit aller bei dem ID-Provider-Computersystem hinterlegten Attributwerte 190 und/oder durch Empfang von statistischen Daten externer Datenquellen gewonnen werden.

Das ID-Provider-Computersystem kann auch über eine Uhr 172 verfügen, die die jeweiligen Attributwerte nach Speicherung oder Änderung mit einem Zeitstempel versieht. Vorzugsweise ist eine Speicherung oder Änderung eines Attributwerts mit einer Verifikation des Attributwerts verbunden, also einer Prüfung durch den Betreiber des ID-Provider-Computersystems, ob ein Attributwert im Hinblick auf einen bestimmten Nutzer aktuell und korrekt ist. Der Zeitstempel gibt in diesem Fall den Zeitpunkt der letzten Verifikation des Datenwerts an. Der Zeitstempel eines Attributwerts kann von einer dem entsprechenden Attribut zugeordneten zweiten Funktion genutzt werden, um das Vertrauensniveau in Abhängigkeit der verstrichenen Zeit seit der letzten Speicherung, Änderung und/oder Verifikation neu zu berechnen. Nach manchen zweiten Funktionen ist das neu berechnete Vertrauensniveau um so niedriger (im Vergleich zum durch die erste Funktion berechneten Vertrauensniveau), je mehr Zeit verstrichen ist.

Die zweiten Funktionen können in Antwort auf den Empfang der Anfrage 194 und/oder auf regulärer Basis, z.B. als cron-job, ausgeführt werden.

Nachdem das ID-Provider-Computersystem 136 die dem Nutzer 102 zugeordneten Attributwerte V1, V2 .... der in der Anfrage 194 spezifizierten Attribute A1, A2, .. und die diesen zugeordneten Vertrauensniveaus 198 ermittelt und ggf. durch ein oder mehrere zweite Funktionen neu berechnet hat, generiert das ID-Provider-Computersystem eine Antwort 195, welche die ermittelten Attributwerte und zugeordneten Vertrauensniveaus enthält. Optional kann die Antwort außerdem noch attributwertspezifische Zeitangaben enthalten, die angeben, zu welcher Zeit der Attributwert gespeichert, geändert und/oder verifiziert wurde. Dies kann vorteilhaft sein, da eine Zeitangabe es dem Dienst-Computersystem ermöglicht, selbst noch besser und feingranularer für jedes einzelne Attribut entscheiden zu können, welches Mindestvertrauensniveau und welches maximale Alter seit der letzten Verifikation im Hinblick auf ein bestimmtes Attribut als akzeptabel angesehen wird.

Die Antwort 195 wird über das Netzwerk 116 an das Dienst-Computersystem 150 gesendet. Die in der Antwort enthaltenen Attributwerte stellen die digitale Identität des Nutzers 102 dar. Typischerweise hat der Nutzer mehrere verschiedene digitalen Identitäten, um sich gegenüber verschiedenen Diensten zu identifizieren, denn die Anforderungen der verschiedenen Dienste (Bankdienstleistungen, Auto-Verleih, Zugriff auf geschützte Patientendaten, Zutritt zu geschützten Gebäuden und Räumen, Nutzung von online-Shops) unterscheiden sich. Diejenigen Attribute, die das Dienst-Computersystem in der Anfrage 194 spezifiziert, sind diejenigen Attribute, deren Attributwerte für den speziellen Dienst 156 besonders wichtig sind und welche die digitale Identität des Nutzers 102 in Bezug auf diesen Dienst 156 ausmachen.

Auf einem nicht-flüchtigen Speichermedium 153 des Dienst-Computersystems sind Programminstruktionen in Form eines Moduls zur Identitätsprüfung 111 gespeichert, die der Prüfung der digitalen Identität des Nutzers 102 dienen. Zum Beispiel kann das Modul 111 die empfangenen Attributwerte und deren Vertrauensniveaus und ggf. auch attributwertspezifische Zeitwertangaben in der Anfrage mit Referenzwerten vergleichen, die das Dienst-Computersystem 150 gespeichert hat. In Abhängigkeit von dem Ergebnis dieses Vergleichs wird die digitale Identität des Nutzers 102 als authentisch und vertrauenswürdig angesehen und dem Nutzer der Dienst 156 zur Verfügung gestellt, oder die digitale Identität des Nutzers wird als nicht vertrauenswürdig angesehen und der Dienst dem Benutzer versagt. Der oder die Referenzwerte werden üblicherweise im Zuge der Registrierung des Nutzers bei dem Dienst hinterlegt. Der Vergleich mit einem Referenzwert ist jedoch nicht immer notwendig. Der Nutzer kann in manchen Fällen auch ohne vorhergehende Registrierung den Dienst in Anspruch nehmen, wenn er nur dem Dienst-Computersystem diejenigen Attributwerte, die für den Dienst die digitale Identität des Nutzers ausmachen, hinreichend vertrauenswürdig nachweisen kann. Das Dienst-Computersystem könnte die übermittelte digitale Identität speichern, um z.B. für Rechnungs- oder Haftungszwecke darauf zugreifen zu können, und dann den Dienst ohne einen Vergleich mit einem Referenzwert bereitstellen.

**Figur** 2 zeigt eine alternative Spezifikation einer Anfrage 202, welche neben den Attributen A1, A2, A3, [...], auch für zumindest einige dieser Attribute jeweils ein Mindest-Vertrauensniveau enthält. Beispielsweise müssen die Attributwerte für das angeforderte Attribut A1 mit einem Vertrauensniveau von mehr als "L3" und für das angeforderte Attribut A2 mit einem Vertrauensniveau von mehr als "L1" dem ID-Provider-Computersystem vorliegen und zurückgegeben werden. Liegt ein angeforderter Attributwert nicht mit einem mindestens geforderten Vertrauensniveaus verknüpft vor, wird er nicht als Bestandteil der Antwort 204 zurückgegeben, wie dies exemplarisch für Attribut A1 gezeigt ist, und/oder es erfolgt eine entsprechende Warnmeldung an das Dienst-Computersystem 150.

Es ist auch möglich, dass für ein bestimmtes Attribut A2 mehrere Attributwerte des Nutzers gespeichert sind. So könnte in der Datenbank 199 für das Attribut "Postleitzahl" und dem Nutzer 102 mehrere Attributwerte/Postleitzahlen gespeichert sein, falls der Nutzer umgezogen ist und/oder neben seiner Privatanschrift auch eine berufliche Anschrift hinterlegt hat. In Abhängigkeit von verschiedenen Faktoren kann die erste Funktion 192 für die verschiedenen Attributwerte des gleichen Attributs unterschiedliche Vertrauensniveaus berechnet haben, z.B. in Abhängigkeit der jeweils zur Übertragung des Attributwerts verwendeten Schnittstelle bzw. des verwendeten Authentifizierungsverfahrens 110, 112. Je nach Konfiguration des ID-Provider-Computersystems wird dann der Attributwert mit dem höchsten oder mit dem niedrigsten berechneten Vertrauensniveau in der Antwort 204 zurückgegeben, solange nur sichergestellt ist, dass das Vertrauensniveau des zurückgegebenen Attributwerts dem geforderten Mindestvertrauensniveau für das entsprechende Attribut A2 erfüllt.

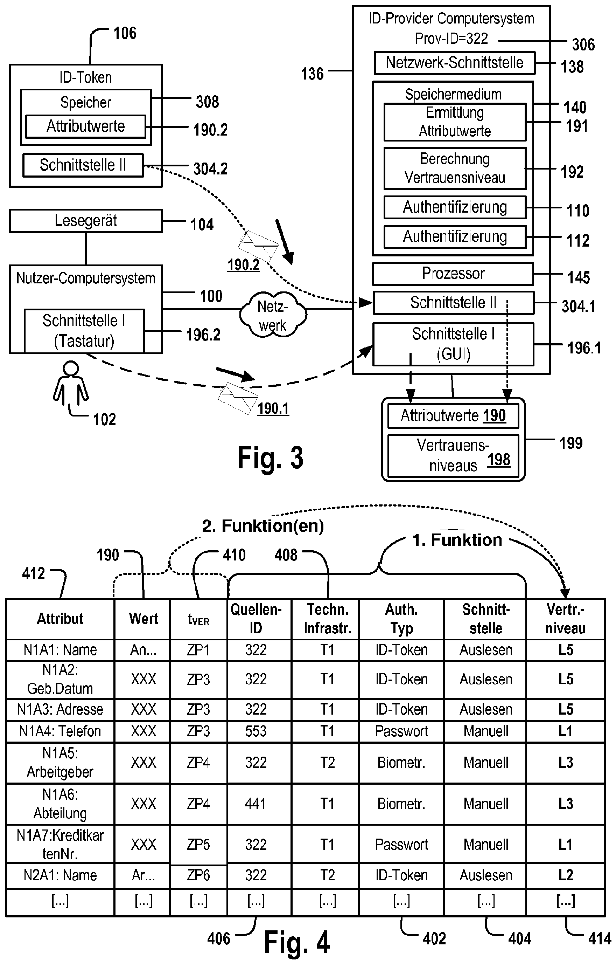

**Figur** 3 zeigt ein Blockdiagramm eines ID-Provider-Computersystems 136, welches über verschiedene Schnittstellen 196, 304 Attributwerte von einem Nutzer 102 empfangen kann. Für die übertragenen Attributwerte berechnet eine erste Funktion 192 Vertrauensniveaus um diese verknüpft mit den jeweiligen Attributwerten in einem Datenspeicher 199 zu speichern. Außerdem kann das ID-Provider-Computersystem ein oder mehrere unterschiedliche Authentifizierungsverfahren 110, 112 für den Nutzer 102 bereitstellen, da eine Übertragung und Speicherung von Attributwerten an das ID-Provider-Computersystem nur dann zugelassen wird, wenn der Nutzer sich gegenüber dem ID-Provider-Computersystem erfolgreich authentifiziert hat, das heißt, seine Identität dem ID-Provider-Computersystem erfolgreich nachgewiesen hat. Der Typ der zur Datenübertragung verwendeten Schnittstelle 304,196 und/oder der Typ des verwendeten Authentifizierungsverfahrens können, neben weiteren Faktoren, von der ersten Funktion 192 bei der Berechnung der Vertrauensniveaus der übertragenen Attributwerte berücksichtigt werden.

Dem Nutzer ist ein ID-Token 106 zugewiesen, welcher einen Speicher 308 enthält, auf welchem Attributwerte 190.2 des Nutzers in geschützter Form gespeichert sein können. Bei dem ID-Token kann es sich um einen hardwarebasierten ID-Token handeln, beispielsweise um einen elektronischen Personalausweis des Nutzers oder ein Smartphone mit Sicherheitselement.

Die Authentifizierungsverfahren 197 können ein oder mehrere merkmalsbasierte Verfahren (insb. Biometrische Verfahren basierend auf Fingerabdruck, Iris-Scan, Stimmenprofile etc.), wissensbasierte und/oder besitzbasierte (z.B. ID-Tokenbasierte) Verfahren sein. ID-Token-gestützte Authentifizierungsverfahren beinhalten, dass der Nutzer durch Besitz eines speziellen Hardwaremoduls, das z.B. durch den ID-Provider herausgegeben oder personalisiert wurde, sich gegenüber dem ID-Provider-Computersystem authentifiziert. Bei dem zur Authentifizierung verwendeten ID-Token kann es sich um den gleichen oder einen anderen ID-Token handeln, der die Attributwerte 190.2 des Nutzers gespeichert hat. Je nachdem wie sicher das Authentifizierungsverfahren ist, das vor der Übertragung von Attributwerten des Nutzers an den Server verwendet wurde, desto höher ist das für diese Attributwerte durch die erste Funktion 192 berechnete Vertrauensniveau.

Neben einer Vielzahl von Authentifizierungsverfahren kann das ID-Provider-Computersystem dem Nutzer auch eine Vielzahl von Schnittstellen zur Datenübertragung bereitstellen, die in manchen Implementierungsbeispielen frei mit den einzelnen Authentifizierungsverfahren kombinierbar sind. So kann ein Authentifizierungsverfahren mit einem bestimmten Sicherheitsniveau (sicher im Hinblick auf die Identität des Nutzers) mit einer Schnittstelle zur Datenübertragung kombiniert werden, die ein bestimmtes Sicherheitsniveau (sicher im Hinblick auf den Schutz der Daten vor Manipulation) bietet, wobei für die übertragenen Attribute ein abgeleitetes Vertrauensniveau berechnet wird, das sich aus dem Sicherheitsniveaus des verwendeten Authentifizierungsverfahrens wie auch der verwendeten Datenübertragungsschnittstelle zusammensetzt.

Schnittstelle 196.1 kann beispielsweise eine graphische Benutzeroberfläche in Form eines HTML Formulars sein, das durch das ID-Provider-Computersystem über das Netzwerk 116 und das Nutzer-Computersystem 100 dem Nutzer angezeigt wird. Der Nutzer gibt über eine entsprechende Schnittstelle 196.2, zum Beispiel Tastatur und/oder Maus, neue Attributwerte ein oder editiert und modifiziert bereits in dem Speicher 199 gespeicherte Attributwerte, die im zugeordnet sind. Da der Nutzer willentlich oder unwillentlich hierbei die Attributwerte modifizieren kann, beispielsweise ein Alter angeben, das nicht seinen realen Alter entspricht, führt die Verwendung dieser Art von Schnittstelle in diesem System zu einem verringerten Vertrauensniveau der übertragenen Attributwerte. Schnittstellen 304.1 und 304.2 ermöglichen, nach gegenseitiger Authentifizierung von ID-Provider-Computersystem und ID-Token, ein Auslesen zumindest einiger der Attributwerte aus dem Speicher 308 des ID-Tokens zur Übertragung an das ID-Provider-Computersystem.

Das ID-Provider-Computersystem kann bereits einige Attributwerte in Speicher 199 gespeichert haben. Auch berechnete Vertrauensniveaus 198 können bereits gespeichert vorliegen. Nach erfolgreicher Authentifizierung des Nutzers kann dieser einige der gespeicherten Attributwerte über Schnittstelle 196 editieren, wobei vorzugsweise deren jeweils zugeordnetes Vertrauensniveau automatisch neu berechnet und gespeichert wird. Es ist auch möglich, dass der Empfang der Anfrage 194, 202 erst den Empfang von einigen der Attribute und die Berechnung von deren Vertrauensniveau initiiert. So kann nach Empfang der Anfrage das ID-Provider-Computersystem ermitteln, ob die angeforderten Attributwerte für den Nutzer vorliegen oder mit dem in der Anfrage spezifizierten Mindestvertrauensniveau vorliegen. Hierzu kann das Modul 191 auf den Speicher 199 lesend zugreifen und dessen Inhalt auswerten. Falls die angeforderten Attributwerte nicht vorliegen oder nicht mit einem hinreichend hohem Vertrauensniveau verknüpft vorliegen, kann das ID-Provider-Computersystem eine gegenseitige Authentifizierung von ID-Provider-Computersystem und ID-Token einleiten um zumindest die angeforderten, nicht in Speicher 199 vorhandenen Attributwerte von dem ID-Token auszulesen und zu empfangen, deren Vertrauensniveau zu berechnen, in Speicher 199 zu speichern und der Antwort 195, 204 hinzuzufügen.

Es ist zudem auch möglich, dass nach der Berechnung der Vertrauensniveaus zumindest ein Teil der vom ID-Provider-Computersystem verwalteten Attributwerte samt zugeordneten Vertrauensniveaus an das ID-Token übertragen werden, um einen Nachweis der digitalen Identität des Nutzers mittels des ID-Tokens unabhängig von dem Netzwerk 116 und der Verfügbarkeit des ID-Provider-Computersystems zu ermöglichen.

Bei dem Dienst 156 könnte es sich beispielsweise um einen ersten KFZ-Verleihdienst handeln. Der Nutzer 102 kann sich bei dem ersten KFZ-Verleihdienst und einem oder mehreren zweiten KFZ-Verleihdiensten (hier nicht dargestellt) registriert haben oder ohne vorherige Registrierung einen zweiten KFZ-Verleihdienst spontan nutzen wollen. Verschiedene KFZ-Verleihdienste können unterschiedlich strikte Anforderungen im Hinblick auf die Verifikation des Führerscheins haben. Der erste KFZ-Verleihdienst kann eine Verifikation des Führerscheins durch den ID-Provider im Abstand von höchstens 3 Monaten vorsehen, der zweite KFZ-Verleihdienst könnte eine entsprechende Verifikation nur alle 6 Monate erfordern. Der Nutzer 102 muss seinen Führerschein erfindungsgemäß nicht alle 3 Monate direkt gegenüber dem ersten KFZ-Verleihdienst 156 und alle 6 Monate gegenüber dem zweiten KFZ-Verleihdienst vorlegen, um beide Dienste nutzen zu können. Vielmehr reicht es aus, alle 3 Monate den Führerschein gegenüber dem ID-Provider vorzulegen.

Der ID-Provider kann entsprechend die erste Funktion 192 so definieren, dass nach erfolgreicher Verifikation des Attributwerts "Führerschein vorhanden=Ja" ein Vertrauensniveau für diesen Attributwert berechnet wird, der der Sicherheit/Vertrauenswürdigkeit des verwendeten Verifikationsverfahrens (persönliches Vorlegen des Führerscheins, Auslesen aus Personalausweis, Einsenden einer beglaubigten oder unbeglaubigten Kopie, manuelles Editieren des Attributwertes etc.) und/oder der Sicherheit der technischen Infrastruktur 408 des ID-Provider Computersystems entspricht. Die Uhr 172 kann den Zeitpunkt der Verifikation erfassen und diese in Assoziation mit den jeweiligen Attributwerden speichern. Durch regelmäßiges Ausführen der zweiten Funktionen unter Berücksichtigung der seit diesem Zeitpunkt jeweils vergangenen Zeit kann das Vertrauensniveau im Laufe der Monate sinken. Nach 3 Monaten ist das Vertrauensniveau für diesen Attributwert also u.U. schon auf einen Wert gesunken, der von dem ersten KFZ-Verleihdienst als nicht mehr hinreichend vertrauenswürdig angesehen wird. Der Nutzer kann sich also mit diesem Vertrauensniveau für den Attributwert "Führerschein vorhanden=Ja" nicht mehr gegenüber dem ersten KFZ-Verleihdienst authentifizieren, wohl aber noch gegenüber dem zweiten KFZ-Verleihdienst, der dieses Vertrauensniveau noch als hinreichend ansieht. Nach erneuter Verifikation wird der besagte Attributwert erneut gespeichert und die erste Funktion angewendet, so dass das Vertrauensniveau für den besagten Attributwert wieder hinreichend hoch ist, dass der Nutzer sich auch gegenüber dem ersten KFZ-Verleihdienst authentifizieren kann.

**Figur 4** zeigt eine Tabelle mit Spalten, deren Werte als Input in die Berechnung der attributspezifischen Vertrauensniveaus durch die erste Funktion 192 eingehen können. Die Attribute und Vertrauensniveaus können in Speicher 199 beispielsweise in Form einer Tabelle gespeichert sein. Einem Nutzer mit Nutzer-ID N1 sind sieben Attribute von A1 "Name" bis A7 "Kreditkartennummer" zugeordnet, wobei die Tabelle jedoch die Attributwerte einer großen Vielzahl an Nutzern N2, ..., enthalten kann. In der Spalte "Wert" sind die dem Attribut und dem Nutzer zugeordneten Attributwerte gespeichert. In Spalte "Quellen-ID" ist eine Kennung von externen Computersystemen, z.B. weiteren Dienst-Computersystemen, dem Nutzer-Computersystem, angegeben, von welcher die Attributwerde durch das ID-Provider-Computersystem empfangen wurden. Der Wert "322", die Kennung des ID-Provider-Computersystems selbst, impliziert, dass die Attributwerte innerhalb einer vom Operator des ID-Provider-Computersystems bereitgestellten Sicherheitsinfrastruktur generiert wurden, also beispielsweise innerhalb des Rechenzentrums, in welchem das ID-Provider-Computersystem steht. Die technische Infrastruktur 408 kann je nach deren Sicherheitsniveau in verschiedene Klassen T1, T2, ..., unterteilt sein. Das ID-Provider-Computersystem kann beispielsweise ein verteiltes Computersystem innerhalb eines sicheren Rechenzentrums bestehend aus mehreren Rechnern sein. Rechner, die bei der Generierung, Speicherung oder Verwaltung der Attributwerte 190, beim Authentifizierungsprozess oder beim Datenempfang beteiligt waren, können in Abhängigkeit von der verwendeten Firewall, der Stärke verwendeter kryptographischer Schlüssel, und anderer Faktoren unterschiedliche Sicherheitsniveaus haben, die alle in den Identifikator "T" für die technische Infrastruktur 408 eingehen. Die Spalte "Auth. Typ" 402 enthält Informationen darüber, welches Authentifizierungsverfahren vor der Übertragung der Attributwerte an das ID-Provider-Computersystem bzw. vor dem Editieren bereits übertragener Daten zur Authentifizierung des Nutzers gegenüber dem ID-Provider-Computersystem verwendet wurde. Die Spalte "Schnittstelle" 404 beinhaltet die zur Übertragung verwendete Schnittstelle, z.B. "manuell" bei Attributwerten, die über eine GUI wie z.B. ein HTML Formular übertragen oder nach Übertragung editiert wurden, oder "Auslesen", falls der Attributwert automatisch aus dem ID-Token ausgelesen wurde. Eine Zeile entspricht dabei einem Datensatz für einen Attributwert. Es ist möglich, dass ein Nutzer mehrere Attributwerte und entsprechende Datensätze für ein bestimmtes Attribut besitzt. In der Spalte "Vertrauensniveau" 414 befinden sich Vertrauensniveaus "L1" - "L5", die jeweils aus den Zellenwerten der Spalten 402, 404 und/oder 406 des entsprechenden Datensatzes mittels der ersten Funktion berechnet und ggf. in attributspezifischer Weise unter Berücksichtigung einer Zeitangabe 410 bezüglich der Speicherung oder Verifikation des Attributwerts mit einer zweiten Funktion neuberechnet und verfeinert wurden. Je nach Implementierungsvariante können auch noch weitere oder andere Werte in die Berechnung der Vertrauensniveaus durch die erste und/oder zweite Funktion einfließen.

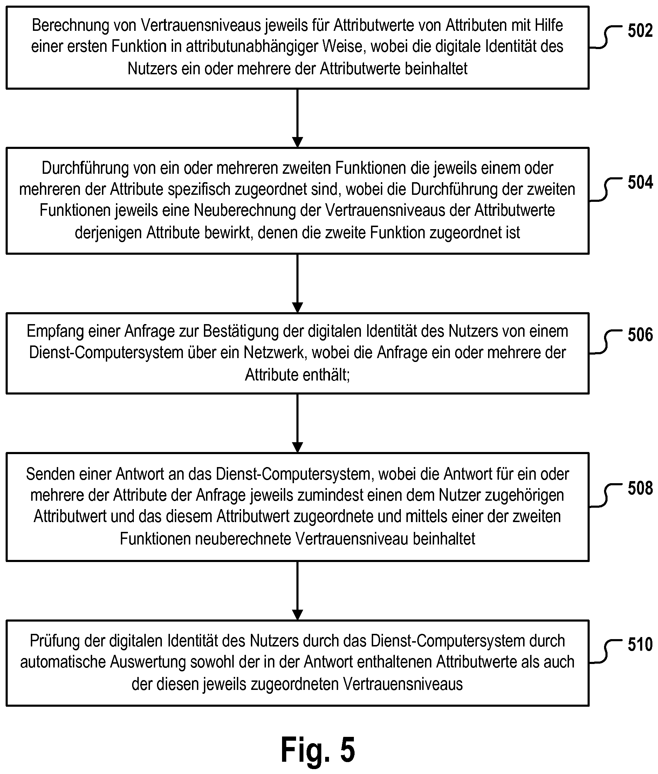

**Figur** 5 zeigt ein Flussdiagramm eines computerimplementierten Verfahrens zur Bestätigung einer digitalen Identität eines Nutzers 102 gegenüber einem Dienst-Computersystem 150, das diese digitale Identität prüft. Eine erste Funktion 192 des ID-Provider-Computersystems 136 berechnet in Schritt 502 für eine Menge von Attributwerten 190 jeweils ein Vertrauensniveau 198. In Schritt 504 führt das ID-Provider-Computersystem zudem eine oder mehrere zweite Funktionen 193 durch, die das Vertrauensniveau in attributspezifischer Weise neu berechnet. Die Neuberechnung kann zu einer kompletten Überschreibung und Ersetzung des von der ersten Funktion berechneten Vertrauensniveaus führen, oder zu einer Erhöhung oder Verringerung des durch die erste Funktion berechneten Vertrauensniveaus. In Schritt 506 empfängt das ID-Provider-Computersystem eine bereits in Figuren 1 und 2 beschriebene Anfrage 194, 202. Das ID-Provider-Computersystem ermittelt ein oder mehrere Attributwerte V1, V2,..., die den in der Anfrage spezifizierten Attributen A1, A2,..., entsprechen und dem Nutzer 102 zugeordnet sind sowie die entsprechenden Vertrauensniveaus. Das ID-Provider-Computersystem sendet in Schritt 508 die ermittelten Attributwerte und Vertrauensniveaus in einer Antwort 195, 204 an das Dienst-Computersystem 150. In Schritt 510 führt das Dienst-Computersystem eine Prüfung der digitalen Identität des Nutzers durch. Dies geschieht durch automatische Auswertung sowohl der in der Antwort enthaltenen Attributwerte als auch der jeweils zugeordneten Vertrauensniveaus. Entspricht das Vertrauensniveau einer oder mehrerer empfangener Attributwerte beispielsweise nicht einem als Referenz hinterlegten Mindestvertrauensniveau und/oder stimmen die Attributwerte beispielsweise nicht mit als Referenz hinterlegten Attributwerten überein, wird dem Nutzer 102 der Dienst nicht zur Verfügung gestellt.

### Bezugszeichenliste

- 100: Nutzer-Computersystem
- 102: Nutzer
- 104: Lesegerät
- 106: ID-Token
- 110: Authentifizierungsverfahren
- 111: Modul zur Prüfung der digitalen Identität
- 112: Authentifizierungsverfahren
- 116: Netzwerk
- 136: ID-Provider-Computersystem
- 138: Netzwerkschnittstelle
- 140: Speichermedium
- 145: Prozessor
- 150: Dienst-Computersystem
- 152: Netzwerkschnittstelle
- 153: Speichermedium
- 154: Prozessor
- 156: Dienst
- 172: Uhr
- 190: Attributwerte
- 190.1: manuell eingegebene/editierte Attributwerte
- 190.2: automatisch ausgelesene Attributwerte
- 191: Modul zur Ermittlung der Attributwerte
- 192: erste Funktion
- 193: zweite Funktionen
- 194, 202: Anfrage
- 195, 204: Antwort
- 196: grafische Benutzeroberfläche (GUI)
- 198: Vertrauensniveaus
- 199: Datenbank
- 304: Schnittstelle zum automatischen Auslesen von Attributwerten
- 306: Identifikator des ID-Provider Computersystems
- 308: Speichermedium
- 402-414: Spalten
- 502-510: Schritte

## Patentansprüche

1. Computerimplementiertes Verfahren zur Bestätigung und zur Prüfung einer digitalen Identität eines Nutzers (102), wobei das Verfahren von einem ID-Provider-Computersystem (136) und einem Dienst-Computersystem (150) ausgeführt wird, wobei das Verfahren umfasst:
- automatische Berechnung (502) von Vertrauensniveaus (198, 414, L1-L5) jeweils für Attributwerte (190, V1, V2) von Attributen (412, A1, A2) durch das ID-Provider-Computersystem (136) mit Hilfe einer ersten Funktion (192), wobei die erste Funktion die Vertrauensniveaus in attributunabhängiger Weise berechnet, wobei die digitale Identität des Nutzers mehrere der Attributwerte beinhaltet, wobei das Vertrauensniveau einen Grad der Verlässlichkeit der Zuordnung des jeweiligen Attributwertes zu dem Nutzer und/oder den Grad der Verlässlichkeit auf die Richtigkeit des Attributwertes angibt;
- automatische Durchführung (504) von mehreren zweiten Funktionen (193.1-193.4) durch das ID-Provider-Computersystem, wobei jede der zweiten Funktionen einem oder mehreren der Attribute spezifisch zugeordnet ist, wobei die Durchführung der zweiten Funktionen jeweils eine Neuberechnung der Vertrauensniveaus der Attributwerte derjenigen Attribute bewirkt, denen die zweite Funktion zugeordnet ist;
- Empfang (506) einer Anfrage (194, 202) zur Bestätigung der digitalen Identität des Nutzers, wobei die Anfrage durch das ID-Provider-Computersystem (136) von dem Dienst-Computersystem über ein Netzwerk (116) empfangen wird, wobei die Anfrage mehrere der Attribute (A1, A2) enthält;
- Senden (508) einer Antwort (195, 204) von dem ID-Provider-Computersystem an das Dienst-Computersystem über das Netzwerk, wobei die Antwort für mehrere der Attribute der Anfrage jeweils zumindest einen dem Nutzer zugehörigen Attributwert (V1, V2) und das diesem Attributwert zugeordnete und mittels einer der zweiten Funktionen neuberechnete Vertrauensniveau (L1-L4) beinhaltet, wobei die Vertrauensniveaus ihrem jeweiligen Attributwert als Metainformation zugeordnet sind;
- Prüfung (510) der digitalen Identität des Nutzers durch das Dienst-Computersystem durch automatische Auswertung sowohl der in der Antwort enthaltenen Attributwerte als auch der diesen jeweils zugeordneten Vertrauensniveaus.

2. Computerimplementiertes Verfahren nach Anspruch 1, ferner mit:
- auf den Empfang der Anfrage (194, 202), automatische Identifizierung der mehreren zweiten Funktionen, die jeweils ein oder mehreren der mehreren Attribute der Anfrage spezifisch zugeordnet sind; und
- Verwendung der identifizierten zweiten Funktionen für die automatische Durchführung der mehreren zweiten Funktionen.

3. Computerimplementiertes Verfahren nach einem der vorigen Ansprüche,
a) wobei selektiv nur diejenigen Attribute eine zweite Funktion zugeordnet haben, welche in einem als veränderbar deklarierten Variablentyp gespeichert sind; und/oder
b) wobei zumindest eine der zweiten Funktionen bei ihrer Durchführung bewirkt, dass das durch sie neuberechnete Vertrauensniveau von der Zeitspanne, die seit der letzten Berechnung (410) des Vertrauensniveaus durch die erste Funktion vergangen ist; abhängt; und/oder
c) wobei zumindest eine der zweiten Funktionen bei ihrer Durchführung bewirkt, dass das durch sie neuberechnete Vertrauensniveau von der Zeitspanne, die seit einer vordefinierten, absoluten Zeitangabe bis zur Durchführung der zumindest einen zweiten Funktion vergangen ist, abhängt; und/oder
d) wobei zumindest eine der zweiten Funktionen bei ihrer Durchführung bewirkt, dass in das durch sie neuberechnete Vertrauensniveau eines der Attributwerte des Nutzers eingeht: ein oder mehrere Attributwerte (190) dieses Attributs und/oder anderer Attribute (412) des gleichen Nutzers; und/oder
e) wobei zumindest eine der zweiten Funktionen bei ihrer Durchführung bewirkt, dass in das durch sie neuberechnete Vertrauensniveau eines der Attributwerte des Nutzers eingeht: ein oder mehrere Attributwerte (190) dieses Attributs und/oder anderer Attribute von einer Vielzahl anderer Personen; und/oder
f) wobei zumindest eine der zweiten Funktionen auf einer nutzergruppenspezifischen Korrelationsheuristik zweier oder mehrerer Attributwerte beruht; und/oder
g) wobei zumindest eine der zweiten Funktionen nach d) und/oder e) und/oder f) bei ihrer Durchführung bewirkt, dass das durch sie neuberechnete Vertrauensniveau um so geringer ist, je mehr Zeit vergangen ist, seit das ID-Provider-Computersystem die Attributwerte des Nutzers oder der Vielzahl anderer Nutzer, die in die Berechnung eingehen, empfangen hat.

4. Computerimplementiertes Verfahren nach einem der vorigen Ansprüche, wobei die Berechnung der Vertrauensniveaus der mehreren Attributwerte durch die erste Funktion initiiert wird durch:
- Empfang des Attributwertes durch das ID-Provider-Computersystem vom Nutzer (102) oder von einer dem Nutzer zugeordneten Datenverarbeitungsanlage (100, 106); oder
- Speicherung des Attributwertes durch das ID-Provider-Computersystem; oder
- Feststellung, durch das ID-Provider-Computersystem, dass der gespeicherte Attributwert durch den Nutzer manuell editiert wurde, nachdem der Attributwert durch das ID-Provider-Computersystem gespeichert wurde.

5. Computerimplementiertes Verfahren nach einem der vorigen Ansprüche, wobei die Neuberechnung der Vertrauensniveaus der mehreren Attributwerte durch eine der zweiten Funktionen (193) initiiert wird durch:
- ein Triggersignal einer in regelmäßigen Zeitintervallen automatisch ausgeführten Programmroutine; oder
- Empfang der Anfrage; oder
- Speicherung des Attributwertes und des durch die erste Funktion berechneten Vertrauensniveaus durch das ID-Provider-Computersystem.

6. Computerimplementiertes Verfahren nach einem der vorigen Ansprüche, umfassend:
- Bereitstellung einer oder mehrerer Schnittstellen (196.1, 304.1) durch das ID-Provider-Computersystem;
- Empfang der Attributwerte über die eine oder die mehreren Schnittstellen durch das ID-Provider-Computersystem, wobei das ID-Provider-Computersystem erfasst, welche der einen oder der mehreren Schnittstellen zur Übertragung der empfangenen Attributwerte jeweils verwendet wurde;
wobei die Berechnung der Vertrauensniveaus der Attributwerte durch die erste Funktion jeweils umfasst:
- automatische Feststellung (404), über welche der ein oder mehreren Schnittstellen der Attributwert empfangen wurde, wobei das berechnete Vertrauensniveau des Attributwertes um so höher ist, je stärker die zur Übertragung des Attributwerts verwendete Schnittstelle gegenüber Datenmanipulation geschützt ist.

7. Computerimplementiertes Verfahren nach Anspruch 6, wobei:
- die mehreren Schnittstellen eine erste Schnittstelle (196) zur manuellen Eingabe der Attributwerte und zur Übertragung der Attributwerte über das Netzwerk an das ID-Provider-Computersystem umfassen; und
- die mehreren Schnittstellen eine zweite Schnittstelle (304) zum Auslesen von einem oder mehreren der Attributwerte aus einem ID-Token (106) über das Netzwerk durch das ID-Provider-Computersystem umfassen, wobei das ID-Token dem Nutzer zugeordnet ist;
ferner mit:
- Empfang einer ersten Teilmenge (190.1) der Attributwerte über die erste Schnittstelle durch das ID-Provider-Computersystem;
- Empfang einer zweiten Teilmenge (190.2) der Attributwerte über die zweite Schnittstelle durch das ID-Provider-Computersystem;
wobei die Berechnung der Vertrauensniveaus durch die erste Funktion derart erfolgt, dass das Vertrauensniveau von über die zweite Schnittstelle empfangenen Attributwerten höher ist als von über die erste Schnittstelle empfangenen Attributwerten.

8. Computerimplementiertes Verfahren nach einer der vorigen Ansprüche, umfassend:
- Speicherung der Attributwerte und der diesen zugeordneten, durch die erste Funktion berechneten Vertrauensniveaus durch das ID-Provider-Computersystem;
- Bereitstellung einer Schnittstelle (196.1) an den Nutzer zur Ermöglichung des manuellen Editierens der gespeicherten Attributwerte;
- Im Falle des manuellen Editierens eines der Attributwerte, automatische erneute Berechnung des Vertrauensniveaus des editierten Attributwertes durch die erste Funktion (192) derart, dass der Umstand, dass der Attributwert über die Schnittstelle zum manuellen Editieren verändert wurde, in die erneute Berechnung des Vertrauensniveaus eingeht.

9. Computerimplementiertes Verfahren nach einem der vorigen Ansprüche, ferner mit:
- Authentifizierung des Nutzers gegenüber dem ID-Provider-Computersystem mittels eines Authentifizierungsverfahrens (110, 112), um nach erfolgreicher Authentifizierung Attributwerte an das ID-Provider-Computersystem zu übertragen oder Attributwerte (190) zu editieren, die bereits in einem an das ID-Provider-Computersystem operativ gekoppelten Speichermedium (199) gespeichert sind;
- Im Falle einer erfolgreichen Authentifizierung, automatische Erfassung, durch das ID-Provider Computersystem für jedes der übertragenen oder editierten Attributwerte, welches Authentifizierungsverfahren durchgeführt wurde;
wobei die Verlässlichkeit der Zuordnung des Attributwertes zu dem Nutzer von dem verwendeten Authentifizierungsverfahren abhängt,
wobei die durch die erste Funktion berechneten Vertrauensniveaus der Attributwerte umso höher sind, je höher die Sicherheitsanforderungen des zur Übertragung oder zum Editieren des Attributwertes jeweils verwendeten Authentifizierungsverfahrens sind.

10. Computerimplementiertes Verfahren nach einem der vorigen Ansprüche, ferner mit:
- Bereitstellung, durch das ID-Provider-Computersystem, einer Vielzahl von Authentifizierungssystemen, welche zumindest zwei der folgenden Authentifizierungsverfahren umfassen:
• wissensbasierte Authentifizierungsverfahren;
• besitzbasierte Authentifizierungsverfahren;
• merkmalsbasierte Authentifizierungsverfahren;
wobei die Berechnung der Vertrauensniveaus durch die erste Funktion derart erfolgt, dass die Vertrauensniveaus um so höher sind, je mehr der besagten Authentifizierungsverfahren kumulativ zur Authentifizierung eines Nutzers gegenüber dem ID-Provider-Computersystem erforderlich sind.

11. Computerimplementiertes Verfahren nach einem der vorigen Ansprüche, wobei in die Berechnung der Vertrauensniveaus der Attributwerte durch die erste Funktion jeweils eingeht:
- ein Sicherheitsgrad der technischen Infrastruktur (416) und/oder der organisatorischen Infrastruktur des ID-Provider-Computersystems, welche bei der Berechnung des Vertrauensniveaus eines Attributwertes durch das ID-Provider-Computersystem verwendet werden, wobei die Integrität des Attributwertes und/oder der Identität des Nutzers und/oder die Verlässlichkeit auf die Richtigkeit der Zuordnung von Attributwert und Nutzer durch den Sicherheitsgrad der technischen und/oder organisatorischen Infrastruktur bestimmt werden.

12. Computerimplementiertes Verfahren nach einem der vorigen Ansprüche, ferner mit:
- Gegenseitige Authentifizierung eines dem Nutzer zugeordneten ID-Tokens (106) und des ID-Provider-Computersystems (136),
- nach erfolgreicher gegenseitiger Authentifizierung, Lesezugriff des ID-Provider-Computersystems auf ein oder mehrere in dem ID-Token gespeicherte Attributwerte(190.2);
- Signierung der ein oder mehreren gelesenen Attributwerte durch das ID-Provider-Computersystem;
- wobei die Antwort des ID-Provider-Computersystems ein Zertifikat beinhaltet, welches einen öffentlichen Schlüssel enthält, welches dem Dienst-Computer eine Prüfung der Signatur der aus dem ID-Token gelesenen Attribute ermöglicht.

13. Computerimplementiertes Verfahren zur Bestätigung einer digitalen Identität eines Nutzers (102) gegenüber einem Dienst-Computersystem (150), wobei das Verfahren von einem ID-Provider-Computersystem ausgeführt wird und umfasst:
- automatische Berechnung (502) von Vertrauensniveaus (198, L1-L5) jeweils für Attributwerte (190, V1, V2) von Attributen (412, A1, A2) mit Hilfe einer ersten Funktion (192), wobei die erste Funktion die Vertrauensniveaus in attributunabhängiger Weise berechnet, wobei die digitale Identität des Nutzers mehrere der Attributwerte beinhaltet, wobei das Vertrauensniveau einen Grad der Verlässlichkeit der Zuordnung des jeweiligen Attributwertes zu dem Nutzer und/oder den Grad der Verlässlichkeit auf die Richtigkeit des Attributwertes angibt;
- automatische Durchführung (504) von mehreren zweiten Funktionen (193.1-193.4), wobei jede der zweiten Funktionen einem oder mehreren der Attribute spezifisch zugeordnet ist, wobei die Durchführung der zweiten Funktionen jeweils eine Neuberechnung der Vertrauensniveaus der Attributwerte derjenigen Attribute bewirkt, denen die zweite Funktion zugeordnet ist;
- Empfang (506) einer Anfrage (194, 202) zur Bestätigung der digitalen Identität des Nutzers (136) von dem Dienst-Computersystem über ein Netzwerk (116), wobei die Anfrage mehrere der Attribute (A1, A2) enthält;
- Senden (508) einer Antwort (195, 204) an das Dienst-Computersystem über das Netzwerk, wobei die Antwort für mehrere der Attribute der Anfrage jeweils zumindest einen dem Nutzer zugehörigen Attributwert (V1, V2) und das diesem Attributwert zugeordnete und mittels einer der zweiten Funktionen neuberechnete Vertrauensniveau (L1-L4) beinhaltet, wobei die Vertrauensniveaus ihrem jeweiligen Attributwert als Metainformation zugeordnet sind.

14. ID-Provider-Computersystem (136), beinhaltend:
- eine Netzwerkschnittstelle (138);
- einen Prozessor (145); und
- ein computerlesbares Speichermedium (140), wobei das Speichermedium computerinterpretierbare Instruktionen gespeichert hat, welche bei Ausführung durch den Prozessor dazu in der Lage sind, ein Verfahren nach Anspruch 13 zur Bestätigung einer digitalen Identität eines Nutzers (102) gegenüber einem Dienst-Computersystem (150) bereitzustellen.

## Claims

1. A computer-implemented method for confirming and for checking a digital identity of a user (102), wherein the method is performed by an ID provider computer system (136) and a service computer system (150), wherein the method comprises:
- automatically calculating (502) trust levels (198, 414, L1-L5) for attribute values (190, V1, V2) of attributes (412, A1, A2) by the ID provider computer system (136) with the aid of a first function (192), wherein the first function calculates the trust levels attribute-independently, wherein the digital identity of the user includes a plurality of the attribute values, wherein the trust level specifies a degree of reliability of the assignment of each attribute value to the user and/or the degree of reliability of the correctness of the attribute value;
- automatically executing (504) a plurality of second functions (193.1-193.4) by the ID provider computer system, wherein each of the second functions is specifically assigned to one or more of the attributes, wherein the execution of the second functions in each case causes a recalculation of the trust levels of the attribute values of those attributes to which the second function is assigned;
- receiving (506) a request (194, 202) to confirm the digital identity of the user, wherein the request is received by the ID provider computer system (136) from the service computer system via a network (116), wherein the request contains a plurality of the attributes (A1, A2);
- sending (508) a response (195, 204) from the ID provider computer system to the service computer system via the network, wherein the response for a plurality of the attributes of the request in each case includes at least one attribute value (V1, V2) associated with the user and the trust level (L1-L4) assigned to this attribute value and recalculated by means of one of the second functions, wherein the trust levels are assigned to their corresponding attribute values as meta-information;
- checking (510) the digital identity of the user by the service computer system by automatic analysis both of the attribute values contained in the response and the trust levels assigned to said attribute values.

2. The computer-implemented method according to claim 1, also comprising:
- upon receipt of the request (194, 202), automatically identifying the plurality of second functions, which are in each case assigned specifically to one or more of the plurality of attributes of the request; and
- using the identified second functions for the automatic execution the plurality of second functions.

3. The computer-implemented method according to any one of the preceding claims,
a) wherein, selectively, only those attributes which are stored in a variable type declared as changeable are assigned a second function; and/or
b) wherein at least one of the second functions, when executed, causes the trust level recalculated by said second function(s) to be dependent on the period of time that has passed since the last calculation (410) of the trust level by the first function; and/or
c) wherein at least one of the second functions, when executed, causes the trust level recalculated by said second function(s) to be dependent on the period of time that has passed since a predefined, absolute time specification until the at least one second function is executed; and/or
d) wherein at least one of the second functions, when executed, causes the trust level recalculated by said second function(s) to include one of the attribute values of the user: one or more attribute values (190) of this attribute and/or other attributes (412) of the same user; and/or
e) wherein at least one of the second functions, when executed, causes the trust level recalculated by said second function(s) to include one of the attribute values of the user: one or more attribute values (190) of this attribute and/or other attributes from a plurality of other people; and/or
f) wherein at least one of the second functions is based on a user-group-specific correlation heuristic of two or more attribute values; and/or
g) wherein at least one of the second functions according to d) and/or e) and/or f), when executed, causes the trust level recalculated by said second function(s) to be all the lower, the greater the length of time that has passed since the ID provider computer system received the attribute values of the user or the plurality of other users included in the calculation.

4. The computer-implemented method according to any one of the preceding claims, wherein the calculation of the trust levels of the plurality of attribute values by the first function is initiated by:
- receipt of the attribute value by the ID provider computer system from the user (102) or from a data processing system (100, 106) assigned to the user; or
- storing of the attribute value by the ID provider computer system; or
- determination, by the ID provider computer system, that the stored attribute value has been manually edited by the user after the attribute value has been stored by the ID provider computer system.

5. The computer-implemented method according to any one of the preceding claims, wherein the recalculation of the trust levels of the plurality of attribute values by one of the second functions (193) is initiated by:
- a trigger signal of a program routine performed automatically at regular time intervals; or
- receipt of the request; or
- storage the attribute value and of the trust level calculated by the first function by the ID provider computer system.

6. The computer-implemented method according to any one of the preceding claims, comprising:
- providing one or more interfaces (196.1, 304.1) by the ID provider computer system;
- receiving the attribute values via the one or more interfaces by the ID provider computer system, wherein the ID provider computer system detects which of the one or more interfaces was/were used for the transmission of the received attribute values;
wherein the calculation of the trust levels of the attribute values by the first function in each case comprises:
- automatically determining (404) via which of the one or more interfaces the attribute value was received, wherein the calculated trust level of the attribute value is all the higher, the stronger is the protection against data manipulation of the interface used for transmission of the attribute value.

7. The computer-implemented method according to claim 6, wherein:
- the plurality of interfaces comprise a first interface (196) for manually inputting the attribute values and for transmitting the attribute values via the network to the ID provider computer system; and
- the plurality of interfaces comprise a second interface (304) for reading one or more of the attribute values from an ID token (106) via the network by the ID provider computer system, wherein the ID token is assigned to the user;
further comprising:
- receiving a first subset (190.1) of the attribute values via the first interface by the ID provider computer system;
- receiving a second subset (190.2) of the attribute values via the second interface by the ID provider computer system;
- wherein the trust levels are calculated by the first function in such a way that the trust level of attribute values received via the second interface is higher than of attribute values received via the first interface.

8. The computer-implemented method according to any one of the preceding claims, comprising:
- storing, by the ID provider computer system, the attribute values and the trust levels assigned thereto and calculated by the first function;
- providing an interface (196.1) to the user in order to enable manual editing of the stored attribute values;
- in the case of manual editing of one of the attribute values, automatically recalculating the trust level of the edited attribute value by the first function (192) in such a way that the fact that the attribute value has been changed via the interface for manual editing is included in the recalculation of the trust level.

9. The computer-implemented method according to any one of the preceding claims, further comprising:
- authenticating the user to the ID provider computer system by means of an authentication method (110, 112) in order to, following successful authentication, transmit attribute values to the ID provider computer system or edit attribute values (190) that are already stored in a storage medium (199) operatively coupled to the ID provider computer system;
- in the event of successful authentication, automatically detecting, by the ID provider computer system, which authentication method was carried out, for each of the transmitted or edited attribute values;
wherein the reliability of the assignment of the attribute value to the user is dependent on the used authentication method,
wherein the trust levels of the attribute values calculated by the first function are all the higher, the higher are the security requirements of the authentication method used to transmit or to edit the attribute values.

10. The computer-implemented method according to any one of the preceding claims, further comprising:
- providing, by the ID provider computer system, a plurality of authentication systems, which comprise at least two of the following authentication methods:
• knowledge-based authentication method;
• possession-based authentication method;
• feature-based authentication method;
wherein the trust level is calculated by the first function in such a way that the trust levels are all the higher, the higher the number of said authentication methods that are necessary cumulatively for authentication of a user to the ID provider computer system.

11. The computer-implemented method according to any one of the preceding claims, wherein the calculation of the trust level of the attribute values by the first function in each case includes:
- a security level of the technical infrastructure (416) and/or the organisational infrastructure of the ID provider computer system which are used when the trust value of an attribute value is calculated by the ID provider computer system, wherein the integrity of the attribute value and/or the identity of the user and/or the reliability of the correctness of the assignment of attribute value and user are/is determined by the security level of the technical and/or organisational infrastructure.

12. The computer-implemented method according to any one of the preceding claims, further comprising:
- mutual authentication of an ID token (106) assigned to the user and of the ID provider computer system (136);
- following successful mutual authentication, granting of read access for the ID provider computer system to one or more attribute values (190.2) stored in the ID token;
- signing of the one or more read attribute values by the ID provider computer system;
- wherein the response of the ID provider computer system includes a certificate which contains a public key which allows the service computer to check the signature of the attributes read from the ID token.

13. A computer-implemented method for confirming a digital identity of a user (102) to a service computer system (150), wherein the method is executed by an ID provider computer system and comprises:
- automatically calculating (502) trust levels (198, L1-L5) for attribute values (190, V1, V2) of attributes (412, A1, A2) with the aid of a first function (192), wherein the first function calculates the trust levels attribute-independently, wherein the digital identity of the user includes a plurality of the attribute values, wherein the trust level specifies a degree of reliability of the assignment of each attribute value to the user and/or the degree of reliability of the correctness of the attribute value;
- automatically executing (504) a plurality of second functions (193.1-193.4), wherein each of the second functions is specifically assigned to one or more of the attributes, wherein the execution of the second functions in each case causes a recalculation of the trust levels of the attribute values of those attributes to which the second function is assigned;
- receiving (506) a request (194, 202) to confirm the digital identity of the user (136) from the service computer system via a network (116), wherein the request contains a plurality of the attributes (A1, A2);
- sending (508) a response (195, 204) to the service computer system via the network, wherein the response for a plurality of the attributes of the request in each case includes at least one attribute value (V1, V2) associated with the user and the trust level (L1-L4) assigned to this attribute value and recalculated by means of one of the second functions, wherein the trust levels are each assigned to their corresponding attribute value as meta-information.

14. An ID provider computer system (136), including:
- a network interface (138);
- a processor (145); and
- a computer-readable storage medium (140), wherein the storage medium includes computer-interpretable instructions, which, when run by the processor, are capable of providing a method according to claim 13 for confirming a digital identity of a user (102) to a service computer system (150).

## Revendications

1. Procédé mis en œuvre par ordinateur permettant la confirmation et la vérification d'une identité numérique d'un utilisateur (102), où le procédé est exécuté par un système informatique fournisseur d'ID (136) et un système informatique de service (150), le procédé comprenant :
- la calcul automatique (502) de niveaux de confiance (198, 414, L1 à L5)) respectivement pour des valeurs d'attributs (190, V1, V2) d'attributs (412, A1, A2) par le système informatique fournisseur d'ID (136) à l'aide d'une première fonction (192), où la première fonction calcule les niveaux de confiance de manière dépendante par rapport aux attributs, où l'identité numérique de l'utilisateur contient plusieurs parmi les valeurs d'attributs, où le niveau de confiance indique un degré de fiabilité de l'association de la valeur d'attribut respective avec l'utilisateur, et/ou le degré de fiabilité concernant l'exactitude de la valeur d'attribut ;
- l'exécution automatique (504) de plusieurs deuxièmes fonctions (193.1 à 193..4) par le système informatique fournisseur d'ID, où chacune des deuxièmes fonctions est associée spécifiquement à un ou à plusieurs des attributs, où l'exécution des deuxièmes fonctions provoque respectivement un nouveau calcul des niveaux de confiance des valeurs d'attributs des attributs en question auxquels est associée la deuxième fonction ;
- la réception (506) d'une demande (194, 202) d'une confirmation de l'identité numérique de l'utilisateur, où la demande par le système informatique fournisseur d'ID (136) est reçue par le système informatique de service par le biais d'un réseau (116), où la demande contient plusieurs parmi les attributs (A1, A2) ;
- l'envoi (508) d'une réponse (195, 204) du système informatique fournisseur d'ID au système informatique de service par le biais du réseau, où la réponse contient, pour plusieurs des attributs de la demande, respectivement au moins une valeur d'attribut (V1, V2) associée à l'utilisateur et le niveau de confiance (L1 à L4) associé à cette valeur d'attribut et nouvellement calculé au moyen d'une des deuxièmes fonctions, où les niveaux de confiance sont associés à leurs valeurs d'attributs respectives sous forme de méta-informations ;
- la vérification (510) de l'identité numérique de l'utilisateur par le système informatique de service par une évaluation automatique à la fois des valeurs d'attributs contenues dans la réponse et respectivement des niveaux de confiance associés à celles-ci.

2. Procédé mis en œuvre par ordinateur selon la revendication 1, avec en outre :
- une identification automatique, suite à la réception de la demande (194, 202), des plusieurs deuxièmes fonctions qui sont respectivement associées spécifiquement à un ou à plusieurs des nombreux attributs ; et
- l'utilisation des deuxièmes fonctions identifiées pour l'exécution automatique des nombreuses deuxièmes fonctions.

3. Procédé mis en œuvre par ordinateur selon l'une des revendications précédentes,
a)dans lequel uniquement les attributs en question, lesquels sont stockés sous forme de types de variables déclarées modifiables, se voient associée une deuxième fonction de manière sélective ; et/ou
b)dans lequel au moins une des deuxièmes fonctions fait en sorte que, lors de son exécution, le niveau de confiance nouvellement calculé par elle dépend de l'intervalle de temps qui s'est écoulé depuis le dernier calcul (410) du niveau de confiance par la première fonction ; et/ou
c)dans lequel au moins une des deuxièmes fonctions fait en sorte que, lors de son exécution, le niveau de confiance nouvellement calculé par elle dépend de l'intervalle de temps qui s'est écoulé depuis une indication temporelle prédéfinie absolue jusqu'à ce que l'exécution de l'au moins une deuxième fonction soit effectuée ; et/ou
d)dans lequel au moins une des deuxièmes fonctions fait en sorte que, lors de son exécution, on tienne compte, dans le niveau de confiance nouvellement calculé d'une des valeurs d'attributs de l'utilisateur : d'une ou de plusieurs valeurs d'attribut (190) de cet attribut et/ou d'autres attributs (412) du même utilisateur ; et/ou
e)dans lequel au moins une des deuxièmes fonctions fait en sorte que, lors de son exécution, on tienne compte, dans le niveau de confiance nouvellement calculé d'une des valeurs d'attributs de l'utilisateur : d'une ou de plusieurs valeurs d'attribut (190) de cet attribut et/ou d'autres attributs (412) d'un grand nombre d'autres personnes ; et/ou
f)dans lequel au moins une des deuxièmes fonctions repose sur une heuristique de corrélation spécifique à un groupe d'utilisateurs de deux ou de plusieurs valeurs d'attributs ; et/ou
g)dans lequel au moins une des deuxièmes fonctions, selon d) et/ou e), et/ou f), fait en sorte que, lors de son exécution, le niveau de confiance nouvellement calculé est d'autant plus faible que davantage de temps s'est écoulé depuis que le système informatique fournisseur d'ID a reçu les valeurs d'attributs de l'utilisateur ou du grand nombre d'autres utilisateurs qui sont impliqués dans le calcul.

4. Procédé mis en œuvre par ordinateur selon l'une des revendications précédentes,
dans lequel le calcul du niveau de confiance des nombreuses valeurs d'attributs est initié par l'intermédiaire de la première fonction par :
- la réception de la valeur d'attribut par le système informatique fournisseur d'ID à partir de l'utilisateur (102) ou à partit d'une unité de traitement de données (100, 106) associée à l'utilisateur ; ou
- le stockage de la valeur d'attribut par le système informatique fournisseur d'ID ; ou
- le constat par le système informatique fournisseur d'ID que la valeur d'attribut stockée a été éditée manuellement par l'utilisateur après que la valeur d'attribut ait été stockée par le système informatique fournisseur d'ID.

5. Procédé mis en œuvre par ordinateur selon l'une des revendications précédentes,
dans lequel le nouveau calcul du niveau de confiance des nombreuses valeurs d'attributs est initié par l'intermédiaire d'une des deuxièmes fonctions (193) par :
- un signal de déclenchement d'une routine de programme exécutée automatiquement à intervalles de temps réguliers ; ou
- la réception de la demande ; ou
- le stockage de la valeur d'attribut et du niveau de confiance calculé par la première fonction par le système informatique fournisseur d'ID.

6. Procédé mis en œuvre par ordinateur selon l'une des revendications précédentes, comprenant :
- la mise à disposition d'une ou de plusieurs interfaces (196.1, 304.1) par le système informatique fournisseur d'ID ;
- la réception des valeurs d'attributs par le système informatique fournisseur d'ID par le biais de l'interface ou des nombreuses interfaces, où le système informatique fournisseur d'ID détecte laquelle ou lesquelles parmi l'interface ou les interfaces a ou ont été employées respectivement pour la transmission des valeurs d'attributs reçues ;
où le calcul des niveaux de confiance des valeurs d'attributs par la première fonction comprend respectivement :
- le constat (404) automatique de l'interface ou des interfaces par l'intermédiaire de laquelle ou desquelles les valeurs d'attributs ont été reçues, où le niveau de confiance calculé de la valeur d'attribut est d'autant plus élevé que l'interface employée pour la transmission de la valeur d'attribut est plus fortement protégée vis-à-vis de la manipulation de données.

7. Procédé mis en œuvre par ordinateur selon la revendication 6, dans lequel :
- les nombreuses interfaces comprennent une première interface (196) pour l'entrée manuelle des valeurs d'attributs et pour la transmission des valeurs d'attributs par le biais du réseau au système informatique fournisseur d'ID ; et
- les nombreuses interfaces comprennent une deuxième interface (304) pour la lecture d'une ou de plusieurs des valeurs d'attributs à partir d'un jeton d'ID (106) par le système informatique fournisseur d'ID par le biais du réseau,
où le jeton d'ID est associé à l'utilisateur :
en outre avec :
- la réception d'une première quantité partielle (190.1) des valeurs d'attributs par le système informatique fournisseur d'ID par le biais de la première interface ;
- la réception d'une deuxième quantité partielle (190.2) des valeurs d'attributs par le système informatique fournisseur d'ID par le biais de la deuxième interface ;
où le calcul des niveaux de confiance par la première fonction a lieu de telle manière que le niveau de confiance de valeurs d'attributs reçues par le biais de la deuxième interface est plus élevé que de valeurs d'attributs reçues par le biais de la première interface.

8. Procédé mis en œuvre par ordinateur selon l'une des revendications précédentes, comprenant :
- le stockage des valeurs d'attributs et des niveaux de confiance associés à celles-ci, calculés par la première fonction par le système informatique fournisseur d'ID ;
- la mise à disposition d'une interface (196.1) au niveau de l'utilisateur pour permettre l'édition manuelle des valeurs d'attributs stockées ;
- dans le cas de l'édition manuelle d'une des valeurs d'attributs, le nouveau calcul automatique du niveau de confiance de la valeur d'attribut éditée par la première fonction (192) de telle manière que les conditions pour que la valeur d'attribut ait été modifiée pour une édition manuelle par le biais de l'interface entrent en considération dans le nouveau calcul du niveau de confiance.

9. Procédé mis en œuvre par ordinateur selon l'une des revendications précédentes, en outre avec :
- une authentification de l'utilisateur vis-à-vis du système informatique fournisseur d'ID au moyen d'un procédé d'authentification (110, 112) afin de transmettre des valeurs d'attributs au système informatique fournisseur d'ID après une authentification réussie ou pour éditer des valeurs d'attributs '190) qui sont déjà stockées dans un support de stockage (199) couplé opérationnellement au système informatique fournisseur d'ID ;
- dans le cas d'une authentification réussie, la détection automatique, par le système informatique fournisseur d'ID, pour chacune des valeurs d'attributs transmises ou éditées, de quel procédé d'authentification a été exécuté ;
où la fiabilité de l'association de la valeur d'attribut et de l'utilisateur dépend du procédé d'authentification employé,
où les niveaux de confiance des valeurs d'attributs calculés par la première fonction sont d'autant plus élevés que les conditions de sécurité du procédé d'authentification employé respectivement pour la transmission ou pour l'édition de la valeur d'attribut sont élevées.

10. Procédé mis en œuvre par ordinateur selon l'une des revendications précédentes, en outre avec :
- la mise à disposition par le système informatique fournisseur d'ID d'un grand nombre de systèmes d'authentification, lesquels comprennent au moins deux des procédés d'authentification suivants :
• des procédés d'authentification basés sur des connaissances ;
• des procédés d'authentification basés sur la possession ;
• des procédés d'authentification basés sur des caractéristiques ;
où le calcul du niveau de confiance par la première fonction a lieu de telle manière que les niveaux de confiance sont d'autant plus élevés que davantage desdits procédés d'authentification sont nécessaires en cumulé pour l'authentification d'un utilisateur vis-à-vis du système informatique fournisseur d'ID.

11. Procédé mis en œuvre par ordinateur selon l'une des revendications précédentes, dans lequel il entre en ligne de compte respectivement dans le calcul des niveaux de confiance des valeurs d'attributs par la première fonction :
- un degré de sécurité de l'infrastructure technique (416) et/ou de l'infrastructure organisationnelle du système informatique fournisseur d'ID, lesquelles sont employées lors du calcul du niveau de confiance d'une valeur d'attribut par le système informatique fournisseur d'ID, où l'intégrité de la valeur d'attribut et/ou l'identité de l'utilisateur, et/ou la fiabilité de l'exactitude de l'association de la valeur d'attribut et de l'utilisateur sont déterminées par le degré de sécurité de l'infrastructure technique et/ou organisationnelle.

12. Procédé mis en œuvre par ordinateur selon l'une des revendications précédentes, en outre avec :
- une authentification réciproque d'un jeton d'ID (106) associé à l'utilisateur et du système informatique fournisseur d'ID (136) ,
- après l'authentification réciproque réussie, l'accès en lecture du système informatique fournisseur d'ID pour une ou plusieurs valeurs d'attributs (190.2) stockées dans le jeton d'ID ;
- la signature de la valeur ou des valeurs d'attributs lues par le système informatique fournisseur d'ID ;
- où la réponse du système informatique fournisseur d'ID contient un certificat, lequel contient une clé publique, laquelle permet à l'ordinateur de service une vérification de la signature des attributs lus à partir du jeton d'ID.

13. Procédé mis en œuvre par ordinateur permettant la confirmation d'une identité numérique d'un utilisateur (102) vis-à-vis d'un système informatique de service (150), où le procédé est exécuté par un système informatique fournisseur d'ID et comprend :
- le calcul automatique (502) de niveaux de confiance (198, L1 à L5)) respectivement pour des valeurs d'attributs (190, V1, V2) d'attributs (412, A1, A2) à l'aide d'une première fonction (192), où la première fonction calcule les niveaux de confiance de manière dépendante par rapport aux attributs, où l'identité numérique de l'utilisateur contient plusieurs parmi les valeurs d'attributs, où le niveau de confiance indique un degré de fiabilité de l'association de la valeur d'attribut respective avec l'utilisateur, et/ou le degré de fiabilité concernant l'exactitude de la valeur d'attribut ;
- l'exécution automatique (504) de plusieurs deuxièmes fonctions (193.1 à 193..4), où chacune des deuxièmes fonctions est associée spécifiquement à un ou à plusieurs des attributs, où l'exécution des deuxièmes fonctions provoque respectivement un nouveau calcul des niveaux de confiance des valeurs d'attributs des attributs en question auxquels est associée la deuxième fonction ;
- la réception (506) d'une demande (194, 202) pour la confirmation de l'identité numérique de l'utilisateur (136) par le système informatique fournisseur d'ID par le biais d'un réseau (116), où la demande contient plusieurs parmi les attributs (A1, A2) ;
- l'envoi (508) d'une réponse (195, 204) au système informatique de service par le biais du réseau, où la réponse contient, pour plusieurs des attributs de la demande, respectivement au moins une valeur d'attribut (V1, V2) associée à l'utilisateur et le niveau de confiance (L1 à L4) associé à cette valeur d'attribut et nouvellement calculé au moyen d'une des deuxièmes fonctions, où les niveaux de confiance sont associés à leurs valeurs d'attributs respectives sous forme de méta-informations.

14. Système informatique fournisseur d'ID (136) contenant :
- une interface de réseau (138) ;
- un processeur (145) ; et
- un support de stockage (140) lisible par ordinateur, où le support de stockage a des instructions interprétables par ordinateur stockées, lesquelles, lors de l'exécution par le processeur, sont aptes à mettre au point un procédé selon la revendication 13 pour la confirmation d'une identité numérique d'un utilisateur (102) vis-à-vis d'un système informatique de service (150).
